(19) Europäisches Patentamt
European Patent Office
Office européen des brevets

(11) Veröffentlichungsnummer: **0 212 635**
**B1**

(12) # EUROPÄISCHE PATENTSCHRIFT

(45) Veröffentlichungstag der Patentschrift: **25.01.89**

(51) Int. Cl.⁴: **C 09 B 62/503,** D 06 P 1/384

(21) Anmeldenummer: **86111561.6**

(22) Anmeldetag: **21.08.86**

(54) **Wasserlösliche Triphendioxazin-Verbindungen, Verfahren zu ihrer Herstellung und ihre Verwendung als Farbstoffe.**

(30) Priorität: **29.08.85 DE 3530830**

(43) Veröffentlichungstag der Anmeldung: **04.03.87 Patentblatt 87/10**

(45) Bekanntmachung des Hinweises auf die Patenterteilung: **25.01.89 Patentblatt 89/4**

(84) Benannte Vertragsstaaten: **BE CH DE FR GB IT LI**

(56) Entgegenhaltungen: **EP-A-0 141 996**
**DE-A-3 336 362**

(73) Patentinhaber: **HOECHST AKTIENGESELLSCHAFT, Postfach 80 03 20, D-6230 Frankfurt am Main 80 (DE)**

(72) Erfinder: **Springer, Hartmut, Dr., Am Erdbeerstein 27, D-6240 Königstein/Taunus (DE)**
Erfinder: **Schwaiger, Günther,Dr., Johannesallee 41, D-6230 Frankfurt am Main 80 (DE)**
Erfinder: **Helmling, Walter, Dr., Fichtestrasse 29, D-6238 Hofheim am Taunus (DE)**

**EP 0 212 635 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung liegt auf dem Gebiet der faserreaktiven Farbstoffe.

Aus der EP-A-0 141 996 und ebenso aus der DE-A-3 439 756 sind bereits symmetrisch aufgebaute faserreaktive Triphendioxazin-Farbstoffe bekannt, deren färberisches Verhalten jedoch nicht zufriedenstellend ist.

Es werden nunmehr wasserlösliche Triphendioxazin-Verbindungen entsprechend der allgemeinen Formel (1)

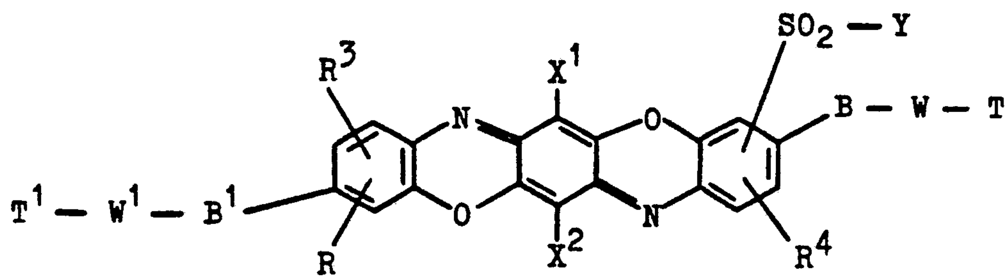

(1)

gefunden, die wertvolle, verbesserte faserreaktive Farbstoffeigenschaften besitzen.

In dieser Formel (1) bedeuten:

R ist ein Wasserstoffatom oder eine wasserlöslichmachende Gruppe, wie eine Carboxy- oder Sulfogruppe oder eine durch eine saure wasserlöslichmachende Gruppe substituierte Alkylgruppe von 1 bis 6, bevorzugt 1 bis 4 C-Atomen, beispielsweise eine durch eine Sulfo-, Carboxy-, Sulfato-, Phosphato- oder Sulfobenzoyloxy-, Sulfo-phenylsulfonyloxy- oder Sulfo-toluylsulfonyloxy-Gruppe substituierte Alkylgruppe von 1 bis 6 C-Atomen, oder ist eine Sulfamoylgruppe, die mono- oder di-substituiert sein kann, wobei die Substituenten vorzugsweise Alkylgruppen von 1 bis 4 C-Atomen, die durch einen Phenylrest substituiert sein können, und Phenylreste sind, wobei diese Reste wiederum bevorzugt wasserlöslichmachende Gruppen enthalten können;

bevorzugt ist R eine Sulfogruppe;

B ist ein Sauerstoff- oder Schwefelatom oder eine Aminogruppe der Formel -NH- oder -N(R')-, in welcher

R' eine Alkylgruppe von 1 bis 8 C-Atomen, bevorzugt von 1 bis 6 C-Atomen, insbesondere von 1 bis 4 C-Atomen, ist, die substituiert sein kann, oder eine Cycloalkylgruppe von 5 bis 8 C-Atomen, wie die Cyclopentyl- oder Cyclohexylgruppe, mit gegebenenfalls 1 bis 3 Methylgruppen und/oder einer Aminogruppe, Alkanoylaminogruppe von 2 bis 5 C-Atomen oder Benzoylaminogruppe als Substituenten ist oder einen Phenylrest bedeutet, der durch 1, 2 oder 3, vorzugsweise 1 oder 2, Substituenten aus der Gruppe Sulfo, Halogen, wie Brom und insbesondere Chlor, Alkyl von 1 bis 4 C-Atomen, wie Methyl und Ethyl, Alkoxy von 1 bis 4 C-Atomen, wie Methoxy und Ethoxy, Nitro, eine Gruppe der Formel $-SO_2-Y'$ mit Y' der nachstehend angegegebenen Bedeutung, Alkylamino mit einem Alkylrest von 1 bis 4 C-Atomen, Dialkylamino mit Alkylresten von jeweils 1 bis 4 C-Atomen, Alkanoylamino von 2 bis 5 C-Atomen, wie Acetylamino und Benzoylamino, substituiert sein kann, oder ein Naphthylrest ist, der durch 1, 2 oder 3 Sulfogruppen und/oder eine Gruppe der Formel $-SO_2-Y'$ substituiert sein kann;

$B^1$ besitzt eine der für B angegebenen Bedeutungen, wobei $B^1$ zu B gleich oder von B verschieden ist;

W ist ein bivalenter aliphatischer, araliphatischer oder aromatischer Rest, der durch 1 oder 2 Heterogruppen, die aus Gruppen der Formel -O-, -NH- und -N(R')- mit R' der obengenannten Bedeutung ausgewählt sind, unterbrochen sein kann;

$W^1$ besitzt eine der für W angegebenen Bedeutungen, wobei $W^1$ zu W gleich oder von W verschieden ist;

T ist ein Wasserstoffatom oder eine Sulfo- Sulfato-, Phosphato- oder Carboxygruppe, bevorzugt eine dieser wasserlöslichmachenden Gruppen;

$T^1$ besitzt eine der für T angegebenen Bedeutungen, wobei $T^1$ zu T gleich oder von T verschieden ist, wobei $T^1$ jedoch zwingend eine dieser wasserlöslichmachenden Gruppen ist, wenn R ein Wasserstoffatom bedeutet; insbesondere ist $T^1$ eine Sulfogruppe, wenn R nicht für eine Sulfogruppe steht;

oder die Reste -B-W-T und $T^1$-$W^1$-$B^1$-, zueinander gleich oder voneinander verschieden, bedeuten die Aminogruppe oder einen gegebenenfalls ein oder zwei weitere Heteroatome, wie Stickstoff-, Sauerstoff- oder Schwefelatomen, enthaltenden 5- bis 8-gliedrigen N-heterocyclischen Rest, wie beispielsweise den Piperidino-, Piperazino- oder Morpholinorest,

$R^3$ und $R^4$ sind zueinander gleich oder voneinander verschieden und jedes ist ein Wasserstoffatom oder ein Alkyl von 1 bis 6 C-Atomen, bevorzugt von 1 bis 4 C-Atomen, wie insbesondere hiervon Methyl und Ethyl, ein Alkoxy von 1 bis 5 C-Atomen, bevorzugt von 1 bis 4 C-Atomen, wie insbesondere hiervon Methoxy und Ethoxy, ein Halogen, wie Fluor und Brom und insbesondere Chlor, Carboxy oder Sulfo;

$X^1$ ist ein Wasserstoffatom oder ein Halogenatom, wie insbesondere ein Chlor- oder Bromatom, eine Cycloalkylgruppe, eine Aralkyloxygruppe, eine Alkoxygruppe von 1 bis 4 C-Atomen, wie die Methoxygruppe, eine Aryloxygruppe, eine Alkylgruppe von 1 bis 4 C-Atomen, wie die Methylgruppe, eine Arylgruppe, eine Aralkylgruppe, eine Cyangruppe, eine Carboxygruppe, eine Carbalkoxygruppe von 2 bis 5 C-Atomen, wie die Carbomethoxy- oder Carbethoxygruppe, eine N-Alkyl-carbamoyl-Gruppe oder N,N-Dialkyl-carbamoyl-Gruppe

mit Alkylresten von jeweils 1 bis 4 C-Atomen, eine N-Aryl-carbamoyl-Gruppe, eine Alkanoylaminogruppe von 2 bis 5 C-Atomen, wie die Acetylaminogruppe, oder eine Aroylaminogruppe, wie die Benzoylaminogruppe, wobei die Arylreste in diesen Substituenten bevorzugt Phenylreste sind, die noch durch 1 oder 2 Substituenten aus der Gruppe Halogen, wie Chlor, Nitro, Alkyl von 1 bis 4 C-Atomen, Alkoxy von 1 bis 4 C-Atomen, Carboxy und Sulfo substituiert sein können und wobei $X^1$ bevorzugt ein Wasserstoffatom, eine Alkanoylaminogruppe von 2 bis 5 C-Atomen, eine Phenoxygruppe, die durch Chlor substituiert sein kann, eine Alkoxygruppe von 1 bis 4 C-Atomen, eine Alkylgruppe von 1 bis 4 C-Atomen und insbesondere bevorzugt ein Chloratom oder Bromatom ist;

$X^2$ ist mit $X^1$ gleich oder von $X^1$ verschieden und hat eine der für $X^1$ angegebenen Bedeutungen;

die Gruppe $-SO_2-Y$ steht bevorzugt in ortho-Stellung zur Gruppe -B-W-T gebunden;

die Gruppe R steht bevorzugt in ortho-Stellung zur Gruppe $T^1-W^1-B^1-$ gebunden;

Y ist die Vinylgruppe oder eine Ethylgruppe, die in β-Stellung einen durch ein Alkali eliminierbaren Substituenten enthält;

Y' ist die Vinylgruppe oder eine Ethylgruppe, die in β-Stellung einen durch ein Alkali eliminierbaren Substituenten enthält, wobei die Gruppen Y und Y' zueinander gleiche oder zueinander verschiedene Bedeutungen haben können;

von den Sulfo- und Sulfatogruppen, die im Molekül (1) enthalten sein können, enthält das Molekül (1) zwingend mindestens eine, bevorzugt mindestens zwei davon.

Die Reste -B-W-T und $T^1-W^1-B^1-$ können zueinander gleiche oder voneinander verschiedene Bedeutungen besitzen.

Substituenten, die gemäß dem Formelglied Y oder Y' in β-Stellung der Ethylgruppe gebunden sind und durch ein Alkali unter Bildung der Vinylgruppe eliminiert werden können, sind beispielsweise Alkanoyloxygruppen von 2 bis 5 C-Atomen, wie die Acetyloxygruppe, Aroyloxygruppen, wie die Benzoyloxy-, Sulfobenzoyloxy- oder Carboxybenzoyloxy-Gruppe, Dialkylaminogruppen mit Alkylresten von 1 bis 4 C-Atomen, wie insbesondere die Dimethylamino- und Diethylaminogruppe, das Chloratom, das Bromatom, Alkylsulfonyloxygruppen mit Alkylresten von 1 bis 4 C-Atomen, eine Phosphatogruppe, eine Thiosulfatogruppe oder eine Sulfatogruppe. Bevorzugt sind von den Gruppen entsprechend dem Formelglied Y die β-Chlorethyl-, β-Phosphatoethyl- und β-Thiosulfatoethyl-Gruppe und insbesondere die Vinylgruppe und ganz besonders bevorzugt die β-Sulfatoethyl-Gruppe.

Das Formelglied Y' ist bevorzugt die β-Phosphatoethyl-, Vinyl- und β-Sulfatoethylgruppe.

Die substituierte Sulfonamidgruppe, die der Formelrest R in der allgemeinen Formel (1) sein kann, enthält bevorzugt, wie bereits erwähnt, wasserlöslichmachende Gruppen, wie insbesondere Sulfo- und Carboxygruppen. Substituierte Sulfonamidgruppen des Restes R sind beispielsweise Verbindungen der allgemeinen Formel (2a) und (2b), hiervon insbesondere der allgemeinen Formel (2a)

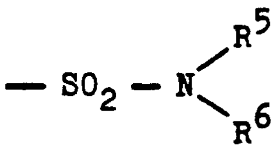 (2a)  $$-SO_2-NH-SO_2-R^7 \quad (2b)$$

in welchen bedeuten:

$R^5$ ist ein Wasserstoffatom oder eine Alkylgruppe von 1 bis 6 C-Atomen, bevorzugt von 1 bis 4 C-Atomen, die durch eine Sulfo-, Carboxy- oder Sulfatogruppe substituiert sein kann, oder ist ein aromatischer Rest, wie ein Naphthylrest oder insbesondere ein Phenylrest, der mindestens eine Sulfogruppe, wie 1 oder 2 Sulfogruppen, als Substituenten besitzt; bevorzugt ist $R^5$ ein Phenylrest, der durch 1 oder 2 Sulfogruppen substituiert ist, oder eine β-Sulfoethyl-Gruppe;

$R^6$ ist ein Wasserstoffatom oder eine Alkylgruppe von 1 bis 6 C-Atomen, bevorzugt von 1 bis 4 C-Atomen, die substituiert sein kann, wie beispielsweise durch eine Alkoxygruppe von 1 bis 4 C-Atomen, wie die Methoxygruppe, eine Sulfato-, Carboxy- oder Sulfogruppe;

$R^7$ ist eine Alkylgruppe von 1 bis 4 C-Atomen, wie insbesondere eine Methyl- oder Ethylgruppe, die substituiert sein kann, wie beispielsweise durch eine Carboxy-, Sulfo- oder Sulfatogruppe, oder ist eine gegebenenfalls substituierte Arylgruppe, insbesondere ein Phenylrest, die substituiert sein kann, wie beispielsweise durch 1 oder 2 Substituenten aus der Gruppe Alkyl von 1 bis 4 C-Atomen, wie Methyl oder Ethyl, Alkoxy von 1 bis 4 C-Atomen, wie Methoxy oder Ethoxy, Carboxy, Sulfo und Chlor, wie beispielsweise insbesondere ein durch eine oder zwei Sulfogruppen substituierter Phenylrest.

Bevorzugt ist der Rest -B-W-T bzw. $T^1-W^1-B^1-$ ein Rest der allgemeinen Formel (2c)

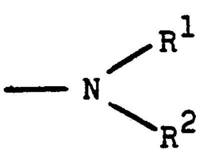 (2c)

in welcher bedeuten:

$R^1$ ist ein Wasserstoffatom oder besitzt eine der Bedeutungen von R';

$R^2$ ist ein Wasserstoffatom oder eine Alkylgruppe von 1 bis 8 C-Atomen, bevorzugt von 1 bis 6 C-Atomen,

insbesondere von 1 bis 4 C-Atomen, die substituiert sein kann, wobei 1 oder 2 dieser Substituenten bevorzugt wasserlöslichmachende Gruppen, wie Sulfo-, Carboxy-, Sulfato- und Phosphatogruppen sind, oder ist eine Cycloalkylgruppe von 5 bis 8 C-Atomen, wie die Cyclopentyl- oder Cyclohexylgruppe, mit gegebenenfalls 1 bis 3 Methylgruppen und/oder einer Aminogruppe, Alkanoylaminogruppe von 2 bis 5 C-Atomen oder Benzoylaminogruppe als Substituenten oder ist der Phenylrest, der durch 1, 2 oder 3, vorzugsweise 1 oder 2, Substituenten aus der Gruppe Sulfo, Carboxy, Halogen, wie Brom und insbesondere Chlor, Alkyl von 1 bis 4 C-Atomen, wie Methyl und Ethyl, Alkoxy von 1 bis 4 C-Atomen, wie Methoxy und Ethoxy, Nitro, eine Gruppe der Formel $-SO_2-Y'$ mit Y' der vorstehend angegebenen Bedeutung, Alkylamino mit einem Alkylrest von 1 bis 4 C-Atomen, Dialkylamino mit Alkylresten von jeweils 1 bis 4 C-Atomen, Alkanoylamino von 2 bis 5 C-Atomen, wie Acetylamino, und Benzoylamino, substituiert sein kann, oder ist ein Naphthylrest, der durch 1, 2 oder 3 Sulfogruppen und/oder eine Gruppe der Formel $-SO_2-Y'$ substituiert sein kann,

wobei $R^2$ zu $R^1$ gleich oder von $R^1$ verschieden ist, oder

$R^1$ und $R^2$ bilden zusammen mit dem Stickstoffatom und einem, zwei oder drei Alkylenresten von 1 bis 5 C-Atomen und gegebenenfalls einem oder zwei weiteren Heteroatomen, wie Stickstoff-, Sauerstoff- oder Schwefelatomen, einen 5- bis 8-gliedrigen heterocyclischen Rest, wie beispielsweise den Piperidino-, Piperazino- oder Morpholinorest,

wobei die beiden Gruppen $-NR^1R^2$ zueinander gleiche oder voneinander verschiedene Bedeutungen besitzen können.

Sulfogruppen sind Gruppen entsprechend der allgemeinen Formel $-SO_3M$, Carboxygruppen sind Gruppen entsprechend der allgemeinen Formel -COOM, Sulfatogruppen sind Gruppen entsprechend der allgemeinen Formel $-OSO_3M$, Thiosulfatogruppen sind Gruppen entsprechend der allgemeinen Formel $-S-SO_3M$ und Phosphatogruppen sind Gruppen entsprechend der allgemeinen Formel $-OPO_3M_2$, wobei M hier, wie auch später, die folgende Bedeutung besitzt:

M ist ein Wasserstoffatom oder ein Alkalimetall, wie Natrium, Kalium und Lithium, oder das Äquivalent eines Erdalkalimetalls, wie beispielsweise des Calciums.

Die Formelglieder W und $W^1$ sind bevorzugt Alkylengruppen von 1 bis 8 C-Atomen, bevorzugt von 1 bis 6 C-Atomen, insbesondere von 2 bis 4 C-Atomen, wobei deren Alkylenkette durch 1 oder 2 Sauerstoffatome oder Amingruppen der Formeln -NH- oder -N(R')- mit R' der obigen Bedeutung unterbrochen sein kann, oder sind jedes ein Alkylen-phenylen-, ein Phenylen-alkylen-, ein Phenylen-alkylen-phenylen- oder Alkylen-phenylen-alkylen-Rest, wobei in diesen araliphatischen Resten die Alkylenreste solche von 1 bis 4 C-Atomen sind und die Benzolkerne noch durch 1 oder 2 Substituenten aus der Gruppe Sulfo, Carboxy, Sulfamoyl, Carbamoyl, Methyl, Ethyl, Methoxy, Ethoxy, Nitro und Chlor substituiert sein können, oder sind bevorzugt ein Phenylenrest, insbesondere ein meta- oder para-Phenylenrest, der noch durch 1 oder 2 Substituenten aus der Gruppe Sulfo, Carboxy, Sulfamoyl, Carbamoyl, Methyl, Ethyl, Methoxy, Ethoxy und Chlor, bevorzugt jedoch durch Sulfo, substituiert sein kann, oder sind bevorzugt ein Cycloalkylenrest, wie ein Cyclohexylenrest. Bevorzugt ist W oder $W^1$ ein Alkylenrest von 2 bis 4 C-Atomen oder ein Phenylenrest, der durch 1 oder 2 Substituenten, bevorzugt einen Substituenten, aus der Gruppe Sulfo, Carboxy, Methyl, Methoxy, Ethoxy und Chlor substituiert sein kann, oder ist insbesondere bevorzugt ein Alkylenphenylen-Rest, wobei T bzw. $T^1$ an dessen Benzolkern gebunden ist und dieser Benzolkern noch durch eine Sulfogruppe substituiert sein kann.

Die für R', $R^1$ und $R^2$ stehenden Alkylgruppen können substituiert sein, wie beispielsweise durch einen oder zwei Substituenten aus der Menge der Substituenten Halogen, wie Brom und insbesondere Chlor, Sulfato, Phosphato, Sulfo, Carboxy, Carbalkoxy von 2 bis 5 C-Atomen, wie Carbomethoxy und Carbethoxy, Alkanoylamino von 2 bis 5 C-Atomen, wie Acetylamino, Alkylamino mit 1 bis 4 C-Atomen im Alkylrest, wie Methylamino und Ethylamino, Dialkylamino mit 1 bis 4 C-Atomen in den Alkylresten, wie Dimethylamino und Diethylamino, ein in den Alkylresten durch eine Sulfo-, Carboxy-, Sulfato- oder Phosphatogruppe oder eine Alkoxygruppe von 1 bis 4 C-Atomen oder eine β-Sulfatoethoxy- oder β-Sulfatodi-, -tri- oder -tetraglykolether-Gruppe substituiertes Alkylamino oder Dialkylamino mit jeweils 1 bis 4 C-Atomen in den Alkylresten des Mono- bzw. Dialkylamins, eine Gruppe der Formel $-SO_2-Y'$ mit Y' der oben angegebenen Bedeutung, Phenyl und Phenyl, das durch Substituenten aus der Gruppe Alkyl von 1 bis 4 C-Atomen, Alkoxy von 1 bis 4 C-Atomen, Halogen, wie Brom und insbesondere Chlor, Nitro, Sulfo, Carboxy, eine Gruppe der Formel $-SO_2-Y'$ mit Y' der oben angegebenen Bedeutung, Amino, Alkylamino mit einem Alkylrest von 1 bis 4 C-Atomen, Alkanoylamino von 2 bis 5 C-Atomen, wie Acetylamino, Benzoylamino, Sulfobenzoylamino und/oder Carbalkoxy von 2 bis 5 C-Atomen substituiert ist. Phenylsubstituierte Alkylgruppen sind bevorzugt die Benzyl- und die Phenethylgruppe.

Im Falle, daß der Formelrest B eine Aminogruppe ist, ist diese bevorzugt die Gruppe der Formel -NH-.

Von den Resten $R^1$ und $R^2$ sind insbesondere diejenigen bevorzugt, die ein Wasserstoffatom oder eine Alkylgruppe von 1 bis 4 C-Atomen darstellen, wobei die Alkylgruppe durch eine Sulfogruppe, eine Carboxygruppe oder eine Sulfatogruppe substituiert sein kann oder durch eine Monosulfophenyl- oder Disulfophenylgruppe substituiert ist. Insbesondere bevorzugt ist $R^2$ eine β-(Monosulfophenyl- oder -disulfophenyl)-ethyl- oder eine α-(Monosulfophenyl- oder -disulfophenyl)-methyl-Gruppe oder eine β-Sulfatopropyl-Gruppe oder eine γ-Sulfatopropyl-, eine β-Sulfatoethyl-, eine β,γ-Disulfatopropyl-, eine β-Sulfato-iso-propyl, eine α-Sulfatomethylpropyl-, eine β-(β'-Sulfatoethoxy)-ethyl- oder eine β-Sulfo-ethyl-Gruppe.

Bevorzugt ist der Rest -B-W-T insbesondere die β-Sulfatoethylamino-Gruppe.

Bevorzugt sind auch Verbindungen der Formel (1), in welcher jedes $R^1$ ein Wasserstoffatom ist.

Ein Rest der Formeln -B-W-T bzw. $T^1-W^1-B^1-$, in denen B bzw. $B^1$ für ein Sauerstoff- oder Schwefelatom

steht, ist beispielsweise eine Alkoxygruppe von 1 bis 6, bevorzugt von 1 bis 4 C-Atomen, die durch eine Sulfo-, Carboxy-, Sulfato-, Monosulfophenyl- oder Disulfophenylgruppe substituiert sein kann, oder ist eine Alkylthiogruppe von 1 bis 6, bevorzugt von 1 bis 4 C-Atomen, die durch eine Sulfo-, Carboxy-, Sulfato-, Monosulfophenyl- oder Disulfophenyl-Gruppe substituiert sein kann, oder ist eine Phenoxy- oder Phenylthiogruppe, die beide durch 1 oder 2 Sulfo- und/oder Carboxygruppen substituiert sein können. Bevorzugt sind die obigen Reste, in denen B bzw. $B^1$ für ein Sauerstoff- oder Schwefelatom stehen, eine Methoxy-, Ethoxy-, n-Propoxy-, iso-Propoxy-, β-Sulfoethoxy-, β-Sulfatoethoxy-, β-Sulfato-iso-propoxy-, β-Carboxyethoxy-, γ-Carboxy-propoxy-, Monosulfophenoxy-, Disulfophenoxy-, Monosulfo- oder Disulfophenylmethoxy-, Methylthio-, Ethylthio-, n-Propylthio-, β-Sulfatoethyl-thio-, β-Sulfoethyl-thio- oder β-Carboxyethyl-thio-Gruppe.

Besonders hervorzuheben sind von den erfindungsgemäßen Triphendioxazin-Verbindungen diejenigen, die der allgemeinen Formel (1a)

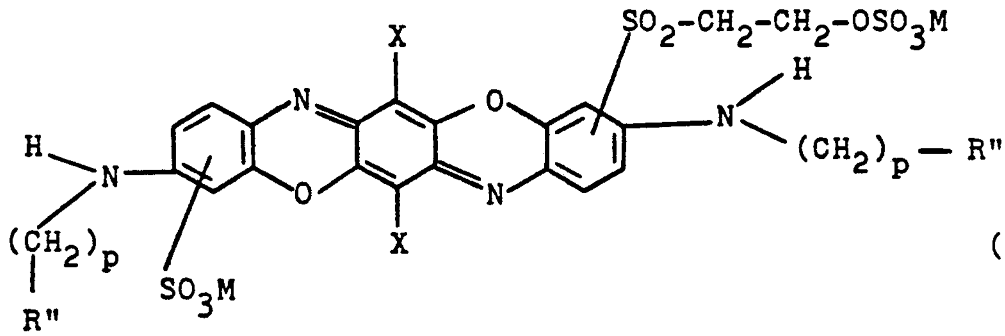

(1a)

entsprechen, in welcher

X für ein Bromatom oder bevorzugt ein Chloratom steht,

M ein Wasserstoffatom oder bevorzugt ein Alkalimetallatom, wie insbesondere Natrium, ist,

p für die Zahl 1, 2, 3 oder 4, bevorzugt 1, 2 oder 3 steht, und

R" eine Sulfo-, Sulfato- oder β-(β'-Sulfatoethoxy)-ethyl-Gruppe oder eine Monosulfophenyl- oder Disulfophenyl-Gruppe ist,

wobei beide p und beide R" jeweils eine zueinander gleiche oder voneinander verschiedene Bedeutung haben können.

Bevorzugte Gruppen des Restes $-(CH_2)_p-R''$ ist die β-Sulfatoethyl-, die γ-Sulfatopropyl-, die β-Sulfato-propyl-, die β-Sulfato-α-ethyl-ethyl-, die β-Sulfato-α-methyl-ethyl-, die β-Sulfatoethyl-, die β,γ-Disulfato-propyl-, die p-Sulfo-phenethyl-, die β-(2,4-Disulfo-phenyl)-ethyl-, eine Sulfobenzyl-, wie insbesondere die p-Sulfobenzyl-, eine Disulfobenzyl- oder die β-(β'-Sulfatoethoxy)-ethyl-Gruppe.

Ganz besonders hervorzuheben sind von den erfindungsgemäßen Triphendioxazin-Verbindungen diejenigen, die der allgemeinen Formel (1b)

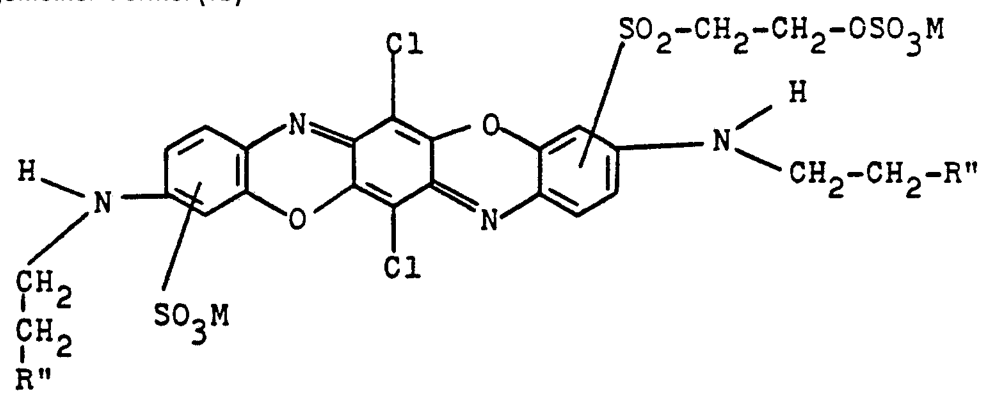

(1b)

entsprechen, in welcher

M für ein Wasserstoffatom und bevorzugt ein Alkalimetallatom, wie insbesondere Natrium, steht und

R" eine Sulfo- oder Sulfatogruppe bedeutet.

Weiterhin sind besonders bevorzugt Verbindungen entsprechend den allgemeinen Formeln (1c) und (1d)

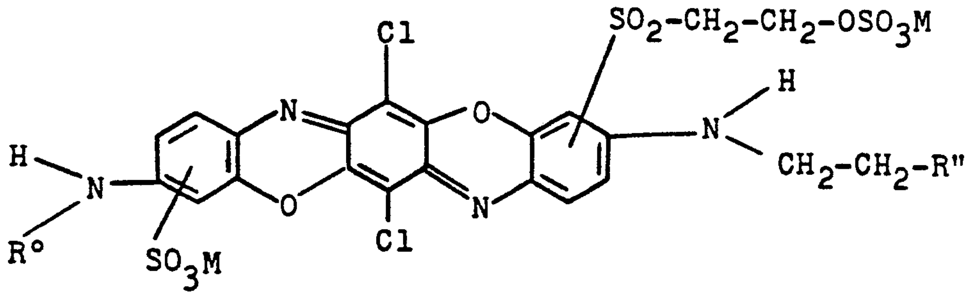

(1c)

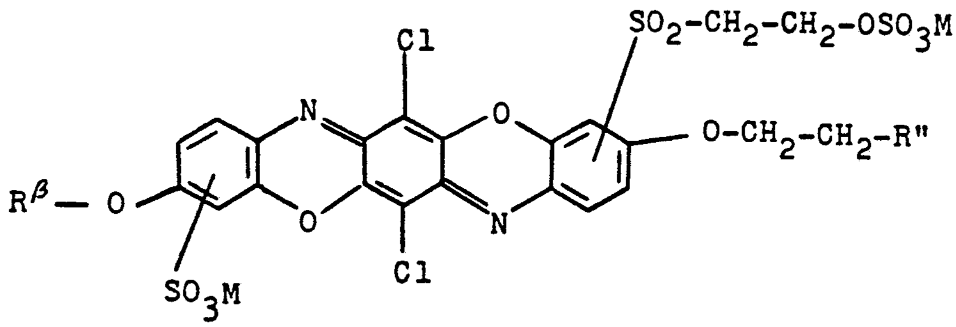

(1d)

in welchen

M und R" die für die allgemeine Formel (1b) genannten Bedeutungen besitzen und

R° ein Wasserstoffatom, eine Alkylgruppe von 1 bis 4 C-Atomen oder eine Phenyl-, Monosulfophenyl- oder Monosulfobenzyl-Gruppe bedeutet und

$R^{\beta}$ eine Alkylgruppe von 1 bis 4 C-Atomen oder eine Phenyl-, Monosulfophenyl- oder Monosulfobenzyl-Gruppe ist.

Die neuen Dioxazinverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinem Sinne und einschließlich des Bedruckens verstanden) von hydroxy- und/oder carbonamidgruppenhaltigen Materialien, insbesondere Fasermaterialien.

Die erfindungsgemäßen Verbindungen der allgemeinen Formel (1) lassen sich derzeit auf chemischem Wege nicht rein herstellen, sondern sie sind

mit den symmetrischen Verbindungen entsprechend den allgemeinen Formeln (3a) und (3b)

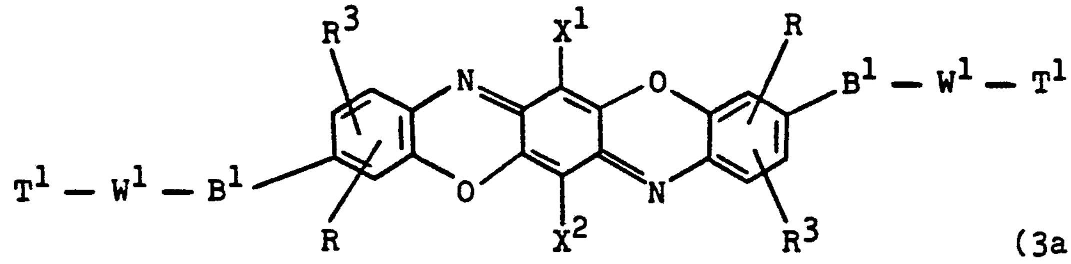

(3a)

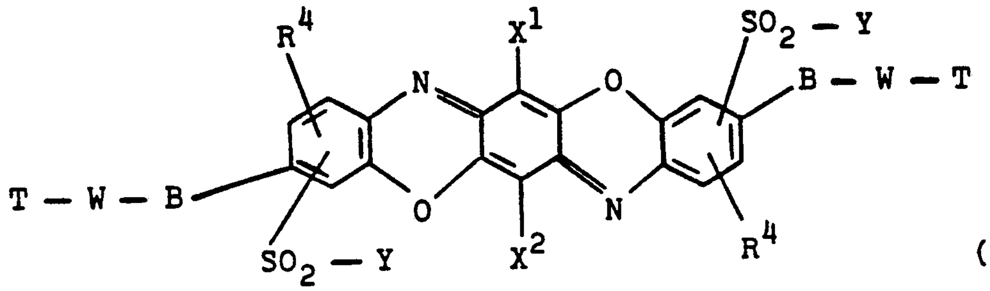

(3b)

in welchen die einzelnen Formelglieder die für Formel (1) angegebenen Bedeutungen haben, vergesellschaftet. Die erfindungsgemäßen Verbindungen entstehen nämlich bei der Synthese als Gemisch mit diesen symmetrischen Verbindungen der Formeln (3). Diese Verbindungen der Formeln (3) stören jedoch nicht die gute Anwendbarkeit der erfindungsgemäßen Verbindungen der Formel (1). Zum einen lassen sich die Verbindungen (3b) ebenfalls als faserreaktive Farbstoffe auf den Faser fixieren und weisen vergleichbare Eigenschaften wie die erfindungsgemäßen Verbindungen (1) auf, wobei jedoch die Verbindungen (1) durch ihr deutlich besseres färberisches Verhalten dominieren und Unegalitäten der Färbungen, die durch die Verbindungen (3b) verursacht werden, ausgleichen können; dieser Effekt kann bereits auftreten, wenn die erfindungsgemäßen Verbindungen der Formel (1) zu etwa 25 %, bezogen auf die Substanz (3b), im Gemisch vorliegen. Zum anderen werden zwar auch die Verbindungen (3a) bei der Anwendung auf der Faser appliziert, sie fixieren jedoch nicht auf der Faser, so daß sie leicht in der nach dem Färbeprozeß erfolgenden Nachbehandlung ausgewaschen werden können.

Die vorliegende Erfindung betrifft somit auch ein technisch vorteilhaftes Farbstoffgemisch, bestehend aus oder enthaltend Verbindungen entsprechend den allgemeinen Formeln (1), (3a) und (3b), beispielsweise im Molprozentverhältnis von (19 bis 50) : (1 bis 25) : (80 bis 25)) bevorzugt im Molverhältnis von (30 bis 50) : (4 bis 25) : (66 bis 25). Vorteilhafte Farbstoffgemische können auch durch Zumischen einer Verbindung (3b) zu den erfindungsgemäß erhältlichen Gemischen erhalten werden, wodurch der Anteil an dem nichtreaktiven Produkt (3a) zu Gunsten der faserreaktiven Farbstoffe verschoben wird. Vorteilhafte Farbstoffgemische sind demgemäß auch solche, die die Verbindungen (1) und (3b) im molaren Verhältnis von 1 : 4 bis 1 : 1 enthalten.

Die vorliegende Erfindung betrifft weiterhin Verfahren zur Herstellung der obengenannten und definierten Verbindungen der allgemeinen Formel (1). Diese sind dadurch gekennzeichnet, daß man eine Aminoverbindung der allgemeinen Formel (4) und eine Aminoverbindung der allgemeinen Formel (5)

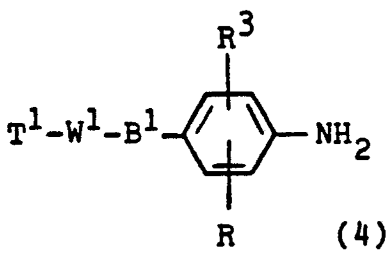

(4)

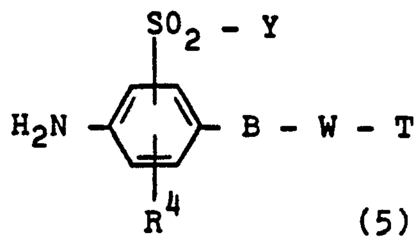

(5)

in welchen

Y die obengenannte Bedeutung besitzt und bevorzugt die β-Hydroxyethyl-Gruppe ist und

R, $R^3$, $R^4$, B, $B^1$, W, $W^1$, T und $T^1$ die obengenannten Bedeutungen haben, wobei substituierte Alkylgruppen in diesen Resten auch hydroxysubstituierte Alkylgruppen sein können, wie beispielsweise der Rest Y' eine β-Hydroxyethyl-Gruppe, und wobei die Benzolkerne von (4) und (5) in einer der ortho-Stellungen zur angegebenen primären Aminogruppe zwingend nicht substituiert sein dürfen,

in an und für sich üblicher und zur Synthese von Triphendioxazin-Verbindungen bekannten Verfahrensweise mit einer 1,4-Benzochinon-Verbindung der allgemeinen Formel (6)

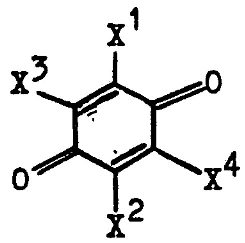

(6)

in welcher

$X^1$ und $X^2$ die obengenannten Bedeutungen haben und

$X^3$ und $X^4$ zueinander gleich oder voneinander verschieden sind und jedes für ein Wasserstoffatom, eine

Alkoxygruppe von 1 bis 4 C-Atomen, wie insbesondere die Methoxygruppe, oder für eine Phenoxygruppe steht oder bevorzugt ein Halogenatom, wie Bromatom und insbesondere Chloratom, ist,

wobei $X^3$ und $X^4$ auch eine zu $X^1$ und $X^2$ gleiche Bedeutung haben können,

zunächst zu einem Zwischenprodukt der angenommenen allgemeinen Formel (7)

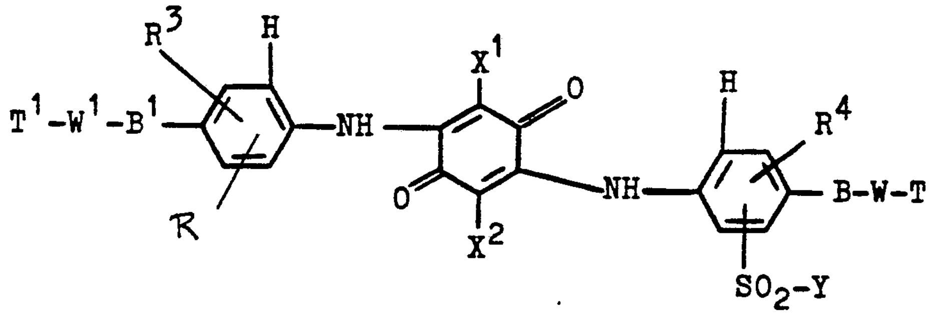

(7)

in welcher R, $R^3$, $R^4$, B, $B^1$, W, $W^1$, T, $T^1$, $X^1$, $X^2$ und Y die obengenannten Bedeutungen haben, umsetzt und dieses, gegebenenfalls nach Zwischenisolierung, vorzugsweise in Gegenwart eines Oxidationsmittels, zum Triphendioxazin cyclisiert, wobei man gegebenenfalls vor oder gleichzeitig mit der Cyclisierung oder erst nach der Cyclisierungsreaktion gegebenenfalls vorhandene Hydroxyalkylgruppen, wie beispielsweise die β-Hydroxyethyl-Gruppen des Formelrestes Y, mittels eines Sulfatisierungs- oder Phosphatierungsmittels, wie 96- bis 100-%-iger Schwefelsäure oder Schwefeltrioxid enthaltender Schwefelsäure bzw. Polyphosphorsäure, in die entsprechenden β-Sulfatoalkyl- bzw. β-Phosphatoalkyl-Gruppen überführt. Verbindungen der Formel (1) mit Y oder Y' gleich einer β-Sulfatoethylsulfonyl-Gruppe können anschließend gemäß bekannten Verfahrensweisen in andere erfindungsgemäße Verbindungen der Formel (1) übergeführt werden, in welcher Y bzw. Y' für die Vinylgruppe oder eine Ethylgruppe mit einem anderen in β-Stellung befindlichen alkalisch eliminierbaren Substituenten stehen. Bei dieser Umsetzung treten natürlich auch die beiden symmetrischen Anilverbindungen auf, von denen hier und im folgenden jedoch nicht die Rede zu sein braucht.

Bevorzugt werden die beiden Aminoverbindungen (4) und (5) und das Chinon (6) in etwa äquimolaren Mengen eingesetzt, wobei die Angabe "etwa" hier bedeutet, daß der jeweilige molare Anteil zu 10 % differieren kann. Bevorzugt wird als Verbindung der allgemeinen Formel (6) das 2,3,5,6-Tetrachlor-1,4-benzochinon (Chloranil) eingesetzt.

Die erfindungsgemäße Umsetzung zweier verschiedener Aminoverbindungen der allgemeinen Formeln (4) und (5) mit einer Verbindung der allgemeinen Formel (6) zum Anil entsprechend der allgemeinen Formel (7) kann in wäßrigem Medium oder in wäßrig-organischem Medium oder in rein organischem Medium erfolgen, wobei die organischen Lösemittel polare aprotische und protische Lösungsmittel darstellen, wie beispielsweise niedere Alkanole, wie Methanol und Ethanol, und halogenierte Benzole, wie o-Dichlorbenzol. Die erfindungsgemäße Umsetzung der Amine (4) und (5) mit den Chinonen (6) kann bei einer Temperatur zwischen 20 und 100°C, vorzugsweise zwischen 50 und 70°C, in Gegenwart eines säurebindenden Mittels, wie beispielsweise eines Alkali- oder Erdalkalicarbonats oder -acetats so beispielsweise Natriumacetat, Natriumcarbonat oder Natriumbicarbonat, oder eines Alkali- oder Erdalkalihydroxids, wie Natriumhydroxid, oder eines Oxids eines Erdalkalimetalls, wie beispielsweise Magnesiumoxid, durchgeführt werden. Sofern in einem wäßrigen oder wäßrig-organischen Medium gearbeitet wird, wird ein pH-Bereich zwischen 4 und 7, vorzugsweise zwischen 5,5 und 6,5, eingestellt.

Das Anil der Formel (7) wird sodann, vorzugsweise unter oxidierenden Bedingungen und vorzugsweise nach vorheriger Isolierung, in an und für sich üblicher und bekannter Verfahrensweise zur Triphendioxazin-Verbindung cyclisiert. Diese Umsetzung kann beispielsweise in Schwefelsäure oder Schwefeltrioxid enthaltender Schwefelsäure als Medium erfolgen, wobei als Oxidationsmittel Schwefeltrioxid, Ammonium- oder Alkalipersulfate, Natriumborat, vorzugsweise jedoch Natrium- oder Kaliumperoxodisulfat (entsprechend den Formeln $Na_2S_2O_8$ bzw. $K_2S_2O_8$), verwendet werden, oder auch mit Oleum in Gegenwart von Jod oder einer anorganischen Jodverbindung analog den Angaben der europäischen Patentanmeldungs-Veröffentlichung Nr. 0 141 359 A.

Vorzugsweise führt man die Umsetzung in konzentrierter Schwefelsäure, wie 96- bis bevorzugt 100-%-iger Schwefelsäure und insbesondere in Schwefeltrioxid enthaltender Schwefelsäure (Oleum), wie bis zu 30 gew.-%-igem Oleum, durch. Die Reaktionstemperatur wird zwischen 5 und 40°C, gegebenenfalls auch bis zu 80°C, bevorzugt jedoch zwischen 15 und 25°C, gewählt.

Sofern der Ringschluß in Schwefelsäure oder Oleum als Reaktionsmedium ausgeführt wird, können Hydroxygruppen, die an einem Alkylrest des Moleküls gebunden sind, wie beispielsweise die oben bereits erwähnten β-Hydroxyethyl-Gruppen des Formelrestes Y oder Hydroxyalkyl-Gruppen der Formelreste $R^1$ und $R^2$, in die entsprechenden Sulfatoalkylgruppen übergeführt werden. Bei Verwendung von Oleum soll die Reaktionstemperatur 30°C nicht überschreiten. Bei Temperaturen oberhalb von 25°C lassen sich erfindungsgemäß auch Sulfogruppen in die aromatischen Ringe des Triphendioxazins (die entsprechenden Arylreste von $R^1$, $R^2$, $X^1$ und $X^2$ eingeschlossen, einführen.

Das als Reaktionsmedium und Agenz verwendete Oleum besitzt in der Regel einen Gehalt von 5 bis 30 Gew.-%, bevorzugt 10 bis 20 Gew.-% an Schwefeltrioxid.

Bekannte Verfahrensweisen zur Umsetzung von aromatischen Aminen mit 1,4-Benzochinonen, die zu Triphendioxazinverbindungen führen, sind beispielsweise in K. Venkataraman, "The Chemistry of Synthetic Dyes", Band V, (1971) S. 419-427, und in Ullmanns Encyklopädie der technischen Chemie, 4. Aufl., Band 8, (1974), S. 240f., sowie der deutschen Offenlegungsschrift Nr. 2 823 828 beschrieben.

Die Ausgangsverbindungen entsprechend der allgemeinen Formel (5) sind bisher teilweise noch nicht bekannt. So lassen sich Verbindungen der allgemeinen Formel (5), in welcher -B-W-T einen Rest der Formel (2) bedeutet, analog bekannten Verfahrensweisen der Umsetzung von Nitrochlorbenzolen mit den entsprechenden Aminen herstellen, so beispielsweise durch Umsetzung eines Chlornitrobenzols der allgemeinen Formel (8)

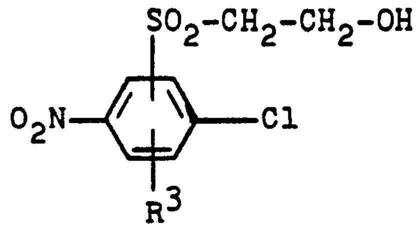

(8)

in welcher $R^3$ die oben genannte Bedeutung besitzt, mit einem Amin der allgemeinen Formel $HNR^1R^2$ mit $R^1$ und $R^2$ der obengenannten Bedeutung entweder in einem Überschuß des Amins der Formel $HNR^1R^2$ oder in Wasser oder einem organischen Medium, wie einem Alkanol, beispielsweise Methanol, Dioxan und Toluol, oder in einem Gemisch von Wasser und von wassermischbaren organischen Lösemitteln, unter Zusatz eines basischen, säurebindenden Mittels, wie beispielsweise Kaliumcarbonat, Natriumcarbonat oder Natriumhydroxid, bei einer Temperatur zwischen 20 und 90°C, vorzugsweise zwischen 40 und 70°C. In wäßrigem Medium wird ein pH-Wert zwischen 6 und 10, bevorzugt zwischen 8 und 9, eingehalten. Solche Verfahrensweisen sind beispielsweise aus Verfahren zur Herstellung von p-Nitrodiphenylamin-o-sulfonsäure aus 2-Chlor-5-nitrobenzolsulfonsäure bekannt (s. beispielsweise Chem. Ber. 41, 3744 ff., und 42, 1077 ff.), die in der reduzierten Form ebenfalls als Ausgangsverbindungen für Dioxazinfarbstoffe dienen.

Die auf diese Weise erhältliche Nitro-anilin-Verbindung der allgemeinen Formel (9)

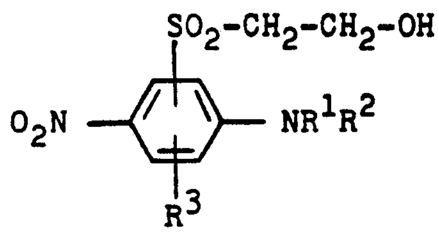

(9)

in welcher $R^1$, $R^2$ und $R^3$ die obengenannten, für $R^3$ insbesondere die für Formel (5) genannten Bedeutungen haben, kann sodann nach an und für sich üblichen Methoden der Reduktion von aromatischen Nitrogruppen mittels Wasserstoff und einem metallischen Katalysator, wie einem Palladium-, Platin- oder Raney-Nickelkatalysator, unter Druck im Autoklaven oder mittels der Methode von Béchamp bei Verwendung von Eisenspänen zur Verbindung entsprechend der allgemeinen Formel (5), in welcher Y für die β-Hydroxyethyl-Gruppe steht, reduziert werden. Aus der 2-(β-Hydroxyethylsulfonyl)-1,4-phenylen-diamin-Verbindung entsprechend der allgemeinen Formel (5) lassen sich die faserreaktiven Ausgangsverbindungen entsprechend der allgemeinen Formel (5), in denen Y für die Vinylgruppe oder eine Ethylgruppe, die in β-Stellung einen durch Alkali eliminierbaren Substituenten enthält, steht, in allgemein bekannter Verfahrensweise der Überführung der β-Hydroxyethylsulfonyl-Gruppe in solche Gruppen herstellen. Bevorzugt wird die β-Hydroxyethylsulfonyl-Gruppe in die β-Sulfatoethylsulfonyl-Gruppe übergeführt.

Besonders vorteilhaft jedoch geht man nicht, wie bereits oben erwähnt, bei der Herstellung der β-Sulfatoethylsulfonyl-Verbindungen der Formel (1) von den faserreaktiven Ausgangsverbindungen aus, sondern von denjenigen der allgemeinen Formel (5), in denen Y und/oder Y' für die β-Hydroxyethyl-Gruppe(n) steht. Diese werden in erfindungsgemäßer Weise zusammen mit dem Amin (4), in welchen ein Y' gegebenenfalls eine β-Hydroxyethyl-Gruppe ist, mit einem 1,4-Benzochinon der allgemeinen Formel (6) über die Anilzwischenisolierung zum Triphendioxazin umgesetzt, und die hierbei entstehende Triphendioxazinverbindung mit den β-Hydroxyethylsulfonyl-Gruppen wird nachträglich verestert (sulfatisiert) nach an und für sich üblichen Verfahrensweisen, die zahlreich für die Überführung von Farbstoffen mit einer β-Hydroxyethylsulfonyl-Gruppe in Farbstoffe mit einer β-Sulfatoethylsulfonyl-Gruppe beschrieben sind, beispielsweise mit 95- bis 100-%-iger Schwefelsäure oder mit Chlorsulfonsäure oder mit Schwefeltrioxid enthaltender Schwefelsäure. Insbesondere erfolgt die Sulfatierung, wie oben erwähnt, bereits vor oder während des oxidativen Ringschlusses mittels Schwefelsäure oder Oleum, das gleichzeitig als

Reaktionsmedium dienen kann, so daß der Einsatz von Ausgangsverbindungen der allgemeinen Formel (5), die die ß2-Sulfatoethylsulfonyl-Gruppe bereits enthalten, nicht erforderlich ist.

Chlornitrobenzolverbindungen entsprechend der allgemeinen Formel (8) sind bekannt (s. beispielsweise deutsche Patentschrift 859 462, Beispiel 5). Sie lassen sich durch Nitrierung einer entsprechenden (β-Hydroxyethylsulfonyl)-chlorbenzol-Verbindung in an und für sich üblicher Verfahrensweise oder, in ebenso an und für sich bekannten Verfahrensweisen, durch Reduktion einer entsprechenden 1-Chlor-4-nitro-benzolsulfochlorid-Verbindung mittels Natriumsulfit zur entsprechenden Sulfinsäure und anschließende Oxethylierung der Sulfinsäure zur β-Hydroxyethylsulfonyl-Verbindung synthetisieren.

Ausgangsverbindungen der allgemeinen Formel (5) sind beispielsweise 3-(β-Hydroxyethylsulfonyl)-anilin-Verbindungen, die in 4-Stellung durch eine (β-Hydroxyethyl)-amino-Gruppe oder durch eine (γ-Hydroxypropyl)-amino-, eine (β-Sulfatoethyl)-amino-, eine (γ-Sulfatopropyl)-amino, eine (β-Sulfoethyl)-amino-, eine Bis-(β-sulfatoethyl)-amino- oder Bis-(β-sulfoethyl)-amino-, eine β-Hydroxyethoxy-, β-Hydroxypropoxy-, β-Hydroxyethylthio-, γ-Hydroxypropylthio-, β-Sulfoethoxy-, β-Sulfatoethoxy- oder eine β-(β'-Hydroxyethoxy)-ethoxy-Gruppe oder durch eine andere in den nachfolgenden Tabellenbeispielen angegebenen Aminogruppe entsprechend der Formel $-NR^1R^2$ substituiert sind und in 4-Stellung bevorzugt durch eine (β-Hydroxyethyl)-amino-, (γ-Hydroxypropyl)-amino-, (β-Hydroxypropyl)-amino-, (β-Sulfoethyl)-amino-, (γ-Sulfopropyl)-amino-, β-(4-Sulfophenyl)-ethyl-amino-, β-(2,4-Disulfophenyl)-ethyl-amino-, β-(2-Sulfo-4-β-hydroxyethylsulfonyl)-ethyl-amino-, Bis-(β-hydroxyethyl)-amino-, Bis-(β-sulfoethyl)-amino-, N-Methyl-N-(β-hydroxyethyl)-amino-, N-Ethyl-N-(β-hydroxyethyl)-amino-, N-Methyl-(β-sulfoethyl)-amino- oder N-Ethyl-N-(β-sulfoethyl)-amino-Gruppe, ganz besonders bevorzugt aber durch eine Hydroxyalkyl-amino-Gruppe von 1 bis 4 C-Atomen, wie die (β-Hydroxyethyl)-, (γ-Hydroxypropyl)- oder (β-Hydroxypropyl)-amino-Gruppe, substituiert sind.

Die als Ausgangsverbindungen dienenden Benzochinone der allgemeinen Formel (6) sind beispielsweise 2-Methyl-3,5,6-tribrom-1,4-benzochinon, 2-Methoxy-3,5,6-trichlor-1,4-benzochinon, 2,3,5,6-Tetramethoxy-1,4-benzochinon, 2,3,5,6-Tetraphenoxy-1,4-benzochinon, 2-Methyl-3,6-dichlor-1,4-benzochinon, 2,5-Dichlor-1,4-benzochinon und bevorzugt 2,3,5,6-Tetrabrom-1,4-benzochinon und insbesondere 2,3,5,6-Tetrachlor-1,4-benzochinon.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfallen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen wertvolle Farbstoffeigenschaften. Sie können deshalb zum Färben (einschließlich Bedrucken) von hydroxygruppenhaltigen und/oder carbonamidgruppenhaltigen Materialien, beispielsweise in Form von Flächengebilden, wie Papier und Leder, oder in der Masse, wie von Polyamid oder Polyurethan, insbesondere aber von solchen Materialien in Faserform, vervendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich, gemäß der erfindungsgemäßen Anwendung, auf den genannten Substraten, insbesondere auf den genannten Fasermaterialien, nach den für wasserlösliche, insbesondere faserreaktive, Farbstoffe bekannten Anwendungstechniken applizieren und fixieren, so beispielsweise, indem man die Dioxazinverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Farbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen guten Farbaufbau. Man färbt bevorzugt in wäßrigem Bad bei Temperaturen zwischen 40 und 100°C, gegebenenfalls bei Temperaturen bis zu 120°C unter Druck, und gegebenenfalls in Gegenwart von üblichen Färbereihilfsmitteln.

Man kann dabei so vorgehen, daß man das Material in das warme Bad einbringt und dieses allmählich auf

die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mittels einer die erfindungsgemäße Verbindung und Natriumbicarbonat oder ein anderes säurebindendes Mittel enthaltenden Druckpaste und anschließendes Dämpfen bei 100 bis 103°C, oder zweiphasig, beispielsweise durch Bedrucken mittels einer die erfindungsgemäße Verbindung enthaltenden neutralen oder schwach sauren Druckpaste und anschließendes Fixieren der erfindungsgemäßen Verbindung entweder durch Hindurchführen des bedruckten Materials durch ein heißes alkali- und elektrolythaltiges Bad oder durch Überklotzen mit einer alkalischen elektrolythaltigen Klotzflotte und anschließendes Verweilen dieses überklotzten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Sowohl in der Färberei als auch in der Druckerei sind die mit den erfindungsgemäßen Dioxazin-Verbindungen erhaltenen Fixiergrade hoch. Die Färbungen und Drucke werden hierbei in gleichmäßiger und egaler Tönung erhalten.

Die säurebindenden und die Fixierung der Verbindung der Formel (1) auf den Cellulosefasern bewirkenden Mittel sind beispielsweise wasserlösliche basische Salze der Alkalimetalle und Erdalkalimetalle von organischen oder anorganischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, vorzugsweise deren Natrium- und Kaliumverbindungen. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäßen Verbindungen (Farbstoffe) mit den säurebindenden Mitteln, gegebenenfalls unter Wärmeeinwirkung, werden die erfindungsgemäßen Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile gut auswaschen lassen.

Die Färbungen auf Polyurethan oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert, wie einem pH-Wert zwischen 3,5 und 5,5, nachgestellt und die eigentliche Färbung bei einer Temperatur zwischen 60 und 98°C und unter Kontrolle dieses pH-Wertes durchgeführt. Die Färbungen können aber auch bei Siedetemperatur oder bei Temperaturen bis 106°C oder aber bis zu 120°C (unter Druck) ausgeführt werden. Gegen Ende der Färbezeit kann der pH-Wert in den neutralen und gegebenenfalls schwach alkalischen Bereich bis zu einem pH-Wert von 8,5 verschoben werden, um besonders bei einer erwünschten Erzielung von hohen Farbtiefen die volle reaktive Bindung zwischen dem Farbstoff der Formel (1) und der Faser herbeizuführen. Gleichzeitig wird der nicht reaktiv gebundene Farbstoffanteil abgelöst.

Die mit erfindungsgemäßen Verbindungen der allgemeinen Formel (1) hergestellten Färbungen und Drucke zeichnen sich durch reine, vorwiegend blaue Farbtöne aus. Insbesondere die Färbungen und Drucke auf Cellulosefasermaterialien besitzen sehr hohe Farbstärken und ebenso sehr gute Lichtechtheiten, einschließlich guter Naßlicht- und Schweißlichtechtheiten, ebenso gute Hypochloritbleich- und Chlorbadewasserechtheiten, weiterhin vorzügliche Naßechtheiten, wie beispielsweise gute bis sehr gute Waschechtheiten bei 60 bis 95°C, auch in Gegenwart von Perboraten, saure und alkalische Walk-, Überfärbe- und Schweißechtheiten, Alkali-, Säure-, Wasser- und Seewasserechtheiten, desweiteren eine gute Plissierechtheit, Bügelechtheit und Reibechtheit. Ebenso besitzen sie eine gute Naßliegeechtheit und eine sehr gute Säurelagerbeständigkeit ("acid fading") beim Lagern von feuchten, noch Essigsäure enthaltendem, gefärbtem Material. Desweiteren sind die Färbungen gegen die üblichen Kunstharzappreturen stabil. Ein Teil der erfindungsgemäßen Verbindungen (Farbstoffe) sind in der Reinheit des Farbtones und in wichtigen Echtheitseigenschaften mit faserreaktiven Anthrachinonfarbstoffen vergleichbar.

Ebenso von Bedeutung ist die erfindungsgemäße Verwendung der Verbindungen der allgemeinen Formel (1) für das faserreaktive Färben von Wolle. Insbesondere läßt sich auch filzfrei oder filzarm ausgerüstete Wolle

(vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colourists 1972 93-99, und 1975, 33-44) mit sehr guten Echtheitseigenschaften färben.

Da die Wasserlöslichkeit der Verbindungen der allgemeinen Formel (1) sehr gut ist, lassen sie sich auch mit Vorteil bei üblichen kontinuierlichen Färbeverfahren einsetzen.

Die Farbstärke der erfindungsgemäßen Verbindungen der allgemeinen Formel (1) ist auch auf Wolle und Polyamidfasermaterialien sehr hoch. Sie liefern auf diesen Fasermaterialien, insbesondere beim reaktiven Farben von Wolle, klare, vorwiegend blaue, Färbungen. Bei Anwendung von Färbetemperaturen von 100 bis 106° C ist eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionellen ähnlichen, bekannten Farbstoffen zeigen sie in überraschender Weise einen sehr guten Farbaufbau, wobei die brillante Nuance in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit der erfindungsgemäßen Verbindung egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemäßen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Naßechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Naßechtheitseigenschaften insbesondere die ausgezeichnete alkalische Schweißechtheit und sehr gute Waschechtheit bei 60° C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Farben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

**Beispiel 1**

a) 19 Teile 1,4-Diaminobenzol-2-sulfonsäure und 26 Teile 3-(β-Hydroxyethylsulfonyl)-4-(β-hydroxyethylamino)-anilin werden in 500 Teilen Wasser bei 60° C und einem pH-Wert von 6,5 gelöst. Anschließend gibt man 26 Teile Chloranil bei einer Reaktionstemperatur von etwa 65° C und unter Einhaltung eines pH-Wertes von 6 bis 6,5 durch etwa 17 Teile Natriumbicarbonat hinzu und führt danach die Reaktion bei gleicher Temperatur und dem angegebenen pH-Wert noch 3 Stunden unter Rühren fort. Das abgeschiedene Reaktionsprodukt wird bei etwa 60° C abgesaugt, mit 200 Teilen Wasser gewaschen und unter reduziertem Druck bei 70° C getrocknet.

b) 45 Teile des unter a) erhaltenen Zwischenprodukts werden bei einer Temperatur zwischen 20 und 25° C in 350 Teilen 10-%-iges Oleum eingetragen. Der Ansatz wird bei dieser Temperatur noch 3 Stunden nachgerührt, sodann werden 36 Teile Natriumperoxodisulfat so eingetragen, daß die Reaktionstemperatur zwischen 20 und 25° C gehalten werden kann. Man rührt weitere 10 Stunden nach, läßt danach den Ansatz auf Eis laufen, stellt mit Calciumcarbonat auf einen pH-Wert zwischen 1 und 1,5, sodann mit Natriumcarbonat auf einen pH-Wert von 5,5, filtriert vom ausgefallenen Calciumsulfat ab und dampft das anfallende Filtrat ein.

Es wird ein elektrolythaltiges (vorwiegend Natriumchlorid enthaltendes) Produkt mit dem Natriumsalz der Verbindung der mutmaßlichen Formel

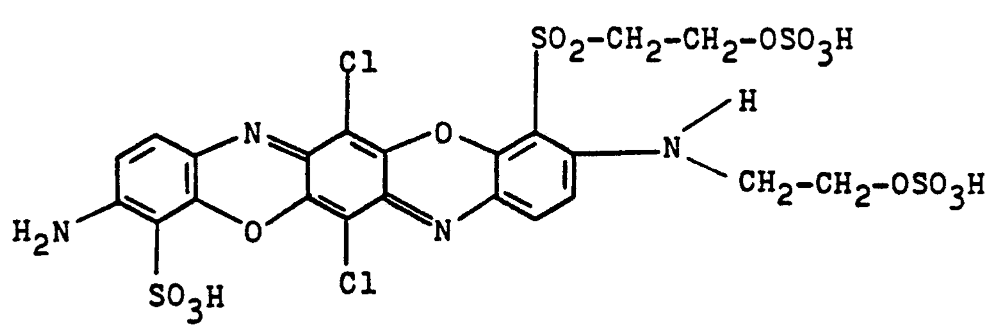

erhalten (die β-Sulfatoethylsulfonyl- bzw. Sulfogruppe kann auch in der anderen ortho-Stellung zur β-Sulfatoethylamino- bzw. Aminogruppe gebunden sein, befindet sich jedoch mit größerer Wahrscheinlichkeit in der durch die obige Formel angegebenen Stellung jeweils ortho-ständig zum Dioxazin-Sauerstoffatom und Amino-Stickstoffatom); in wäßriger Lösung zeigt das Produkt im sichtbaren Bereich ein Absorptionsmaximum bei 603 nm.

Die erfindungsgemäße Verbindung besitzt sehr gute faser-reaktive Farbstoffeigenschaften. Sie färbt die in der Beschreibung genannten Materialien, insbesondere Cellulosefasermaterialien, wie Baumwolle, nach den in der Technik üblichen und bekannten Verfahrensweisen der Applikation und Fixierung von faserreaktiven Farbstoffen in farbstarken, reinen rotstichig blauen Tönen mit hoher Egalität des Farbbildes und mit guten Echtheiten, wie insbesondere guten Lichtechtheiten der trockenen oder feuchten wie mit Trinkwasser befeuchteten, Färbung, guter alkalischer Schweißlichtechtheit, Chlorbadewasserechtheit, Hypochloritbleichechtheit, alkalischer Schweißechtheit, Waschechtheit, auch in Gegenwart von Perboraten, Naßliegeechtheit und Säurelagerbeständigkeit.

c) Die unter a) eingesetzte Anilinverbindung mit der β-Sulfatoethylsulfonyl-Gruppe kann beispielsweise wie folgt hergestellt werden:

Zu einer Lösung von 76,5 Teilen Ethanolamin in 500 Volumenteilen Methanol gibt man bei einer Temperatur von 65°C 132,8 Teile 2-(β-Hydroxyethylsulfonyl)-4-nitrochlorbenzol langsam hinzu und rührt den Reaktionsansatz bei dieser Temperatur noch 6 Stunden weiter. Anschließend destilliert man unter gleichzeitigem kontinuierlichen Zulauf von Wasser 400 Volumenteile Methanol aus dem Reaktionsansatz ab. Aus dem nunmehr wäßrigen Medium kristallisiert beim Abkühlen das 2-(β-Hydroxyethylsulfonyl)-4-nitro-1-(β-hydroxyethyl)-amino-benzol in hoher Reinheit aus. Dieses kann zur Überführung der Nitrogruppe in die Aminogruppe in die katalytische Hydrierung eingesetzt werden. Hierfür werden 58 Teile dieser Nitroverbindung in 400 Volumenteilen Methanol gelöst und in Gegenwart eines Nickelkatalysators in einem Autoklaven bei einer Temperatur von 100°C und einem Druck von 50 bar Wasserstoff hydriert. Der Katalysator wird anschließend abfiltriert und das Filtrat durch Abkühlen der methanolischen Lösung auskristallisieren lassen. Das 3-(β-Hydroxyethylsulfonyl)-4-(β-hydroxyethylamino)-anilin wird in guter Ausbeute und hoher Reinheit erhalten.

**Beispiel 1A**

Ein Farbstoffprodukt mit ähnlich guten Färbe- und Echtheitseigenschaften, wie im Beispiel 1 beschrieben, mit dem erfindungsgemäßen Triphendioxazinfarbstoff des Beispieles 1 wird erhalten, wenn man gemäß der Verfahrensweise des Beispieles 1 verfährt, jedoch die beiden Ausgangs-Aminoverbindungen in folgenden Mengenanteilen einsetzt:

15 Teile 1,4-Diaminobenzol-2-sulfonsäure,
31 Teile 3-(β-Hydroxyethylsulfonyl)-4-(β-hydroxyethylamino)-anilin.

Das Farbstoffgemisch zeigt in wäßriger Lösung im sichtbaren Bereich ein Absorptionsmaximum bei 605 nm.

**Beispiel 1B**

Ein Farbstoffprodukt mit ähnlich guten Färbe- und Echtheitseigenschaften, wie im Beispiel 1 beschrieben, mit dem erfindungsgemäßen Triphendioxazinfarbstoff des Beispieles 1 wird erhalten, wenn man gemäß der Verfahrensweise des Beispieles 1 verfährt, jedoch die beiden Ausgangs-Aminoverbindungen in folgenden Mengenanteilen einsetzt:

11 Teile 1,4-Diaminobenzol-2-sulfonsäure,
37 Teile 3-(β-Hydroxyethylsulfonyl)-4-(β-hydroxyethylamino)-anilin.

Das Farbstoffgemisch zeigt in wäßriger Lösung im sichtbaren Bereich ein Absorptionsmaximum bei 607 nm.

**Beispiel 1C**

Ein Farbstoffprodukt mit ähnlich guten Färbe- und Echtheitseigenschaften, wie im Beispiel 1 beschrieben, mit dem erfindungsgemäßen Triphendioxazinfarbstoff des Beispieles 1 wird erhalten, wenn man gemäß der Verfahrensweise des Beispieles 1 verfährt, jedoch die beiden Ausgangs-Aminoverbindungen in folgenden Mengenanteilen einsetzt:

| | |
|---|---|
| 8 Teile | 1,4-Diaminobenzol-2-sulfonsäure, |
| 42 Teile | 3-(β-Hydroxyethylsulfonyl)-4-(β-hydroxyethylamino)-anilin. |

Das Farbstoffgemisch zeigt in wäßriger Lösung im sichtbaren Bereich ein Absorptionsmaximum bei 608 nm.

**Beispiel 2**

a) 35 Teile 3-Sulfo-4-(β-hydroxyethylamino)-anilin und 39 Teile 3-(β-Hydroxyethylsulfonyl)-4-(β-hydroxyethylamino)-anilin werden in 800 Teilen Wasser bei 60°C und einem pH-Wert von 6,5 gelöst. Anschließend gibt man bei einer Reaktionstemperatur von etwa 65°C und einem pH-Wert von 6 bis 6,5, der mit etwa 24 Teilen Natriumbicarbonat gehalten wird, 37 Teile Chloranil hinzu. Man rührt den Ansatz bei der angegebenen Reaktionstemperatur und dem angegebenen pH-Bereich noch 3 Stunden nach, saugt das Reaktionsprodukt bei etwa 60°C ab, wäscht es mit Wasser nach und trocknet es.

b) 87 Teile des unter a) erhaltenen Zwischenproduktes werden bei einer Temperatur zwischen 20 und 25°C in 600 Teile 10-%-iges Oleum eingetragen; der Ansatz wird in diesem Temperaturbereich noch 4 Stunden nachgerührt. Sodann gibt man 62 Teile Natriumperoxodisulfat unter Einhaltung der Reaktionstemperatur von 20 bis 25°C hinzu, rührt noch 10 Stunden nach und arbeitet dann den Ansatz, wie im Beispiel 1b) beschrieben, auf.

Es wird ein elektrolythaltiges Produkt mit dem Natriumsalz der Verbindung der mutmaßlichen Formel

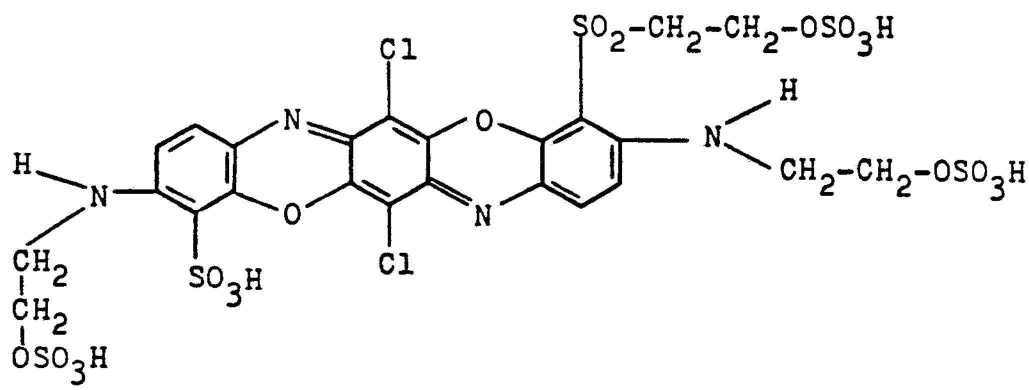

erhalten, das in wäßriger Lösung ein Absorptionsmaximum bei 610 nm besitzt und im übrigen gleichgute färberische Eigenschaften zeigt wie die im Beispiel 1 beschriebene erfindungsgemäße Verbindung. Die erfindungsgemäße Verbindung liefert insbesondere auf Cellulosefasermaterialien nach den üblichen Applikations- und Fixierverfahren farbstarke, egale rotstichig blaue Färbungen und Drucke mit guten Echtheitseigenschaften, von denen Insbesondere die gute Lichtechtheit, alkalische Schweißechtheit, Chlorbadewasserechtheit und Naßlichtechtheit (mit Trinkwasser) hervorgehoben werden können.

**Beispiel 3**

Zu einer 60 bis 65°C warmen Lösung mit einem pH-Wert von 6 von 14 Teilen 3-Sulfo-4-benzylamino-anilin und 13 Teilen 3-(β-Hydroxyethylsulfonyl)-4-(β-hydroxyethylamino)-anilin in 170 Teilen Wasser gibt man unter Aufrechterhaltung einer Reaktionstemperatur von etwa 65°C und einem pH-Wert von 6 bis 6,5 (mittels etwa 8 Teilen Natriumbicarbonat) 12 Teile Chloranil. Anschließend rührt man bei 65°C noch 3 Stunden nach, saugt das Reaktionsprodukt ab, wäscht es mit Wasser und trocknet es.

30 Teile dieses Anil-Zwischenproduktes werden bei einer Temperatur zwischen 20 und 25°C in 300 Teilen 10-%-iges Oleum eingetragen; man rührt den Ansatz in diesem Temperaturbereich noch 2 Stunden nach, setzt

sodann 20 Teile Natriumperoxodisulfat allmählich unter Einhaltung des Temperaturbereiches von 20 bis 25°C hinzu, rührt den Reaktionsansatz noch 10 Stunden nach und arbeitet ihn sodann wie im Beispiel 1b) angegeben auf.

Die erfindungsgemäße Verbindung entsprechend der mutmaßlichen allgemeinen Formel

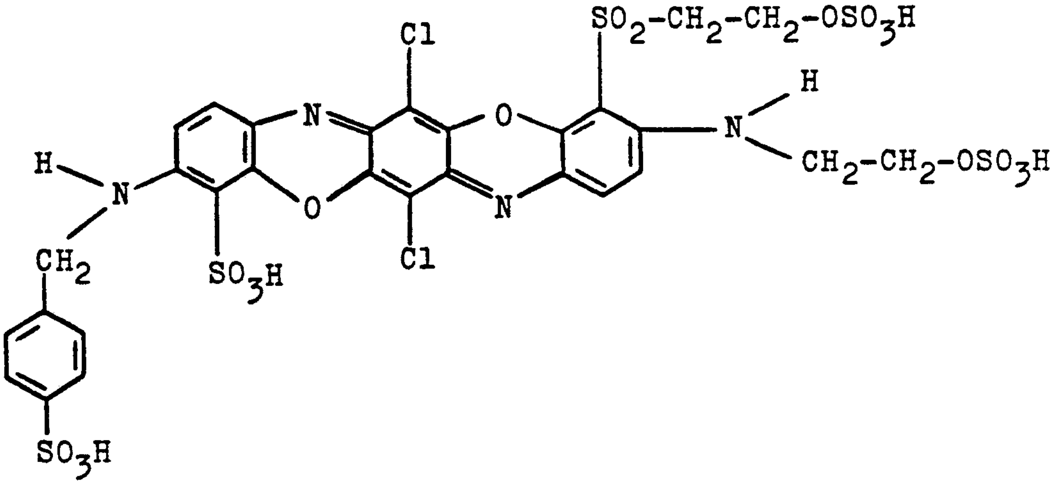

wird in Form des elektrolythaltigen (vorwiegend Natriumchlorid enthaltenden) Natriumsalzes isoliert. Das Syntheseprodukt besitzt in wäßriger Lösung eine Absorptionsmaximum bei 608 nm und liefert nach den in der Technik üblichen Färbe- und Druckverfahren für faserreaktive Farbstoffe farbstarke, egale rotstichig blaue Färbungen und Drucke mit guten Echtheiten, von denen insbesondere die gute Lichtechtheit, alkalische Schweißlichtechtheit und Chlorbadewasserechtheit hervorgehoben werden können.

**Beispiele 4 bis 13**

In den nachfolgenden Tabellenbeispielen sind weitere erfindungsgemäße Triphendioxazin-Verbindungen entsprechend einer allgemeinen Formel (A) und dem entsprechenden Formelrest $Z^1$ beschrieben. Sie lassen sich in erfindungsgemäßer Weise, beispielsweise analog den obigen Ausführungsbeispielen, durch Umsetzung von Chloranil mit 3-Sulfo-4-benzylamino-anilin und einer Anilinverbindung entsprechend der allgemeinen Formel (5a) mit $Z^2$ der in dem jeweiligen Tabellenbeispiel angegebenen Bedeutung und nachträglicher Sulfatierung und Cyclisierung und Sulfonierung herstellen. Diese erfindungsgemäßen Triphendioxazin-Verbindungen besitzen ebenfalls sehr gute Faserreaktive Farbstoffeigenschaften und liefern auf den in der Beschreibung genannten Materialien, wie insbesondere Cellulosefasermaterialien, farbstarke, echte Färbungen mit dem in dem jeweiligen Tabellenbeispiel auf Baumwolle angegebenen Farbton.

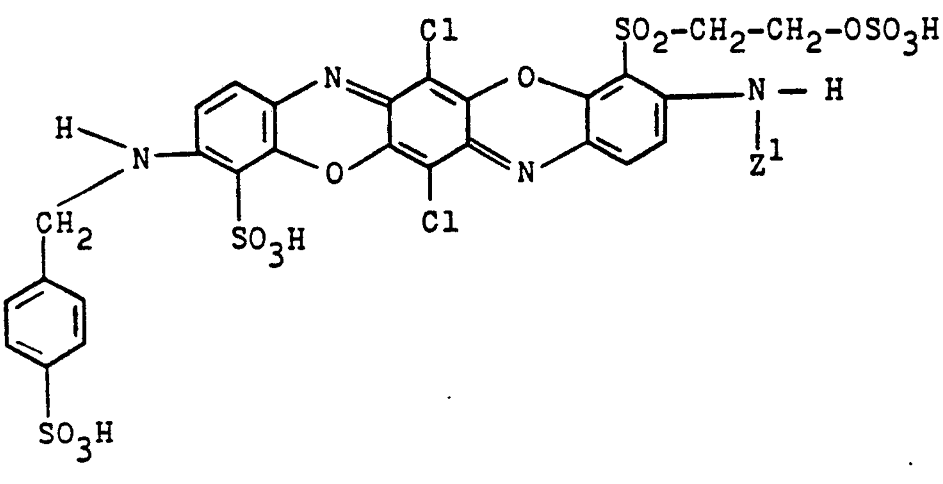

(A)

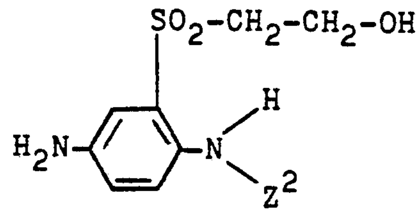

(5a)

| Bsp. | Verbindung der Formel (A) mit $Z^1$ gleich ... | Ausgangsamin (5a) mit $Z^2$ gleich ... | Farbton |
|---|---|---|---|
| 4 | 3-Sulfato-propyl | 3-Hydroxy-propyl | rotstichig blau |
| 5 | 2-Sulfato-propyl | 2-Hydroxy-propyl | dito |
| 6 | 2-Sulfato-1-methyl-ethyl | 2-Hydroxy-1-methyl-ethyl | dito |
| 7 | 2-Sulfato-1-ethyl-ethyl | 2-Hydroxy-1-ethyl-ethyl | dito |
| 8 | 2-(2'-Sulfato-ethoxy)-ethyl | 2-(2'-Hydroxyethoxy)-ethyl | dito |
| 9 | 2-(4'-β-Sulfatoethylsulfonyl-phenyl)-ethyl | 2-(4'-β-Hydroxyethylsulfonyl-phenyl)-ethyl | rotstichig blau |
| 10 | Phenyl | Phenyl | dito |
| 11 | 2-(4'-Sulfophenyl)-ethyl | 2-Phenyl-ethyl | dito |
| 12 | 2-Sulfo-ethyl | 2-Sulfo-ethyl | dito |
| 13 | 2,3-Disulfato-propyl | 2,3-Dihydroxy-propyl | dito |

**Beispiel 14**

Man verfährt zur Herstellung einer erfindungsgemäßen Verbindung gemäß der Verfahrensweise des Beispieles 1, setzt jedoch anstelle der unter a) angegebenen Produkte die folgenden ein:

22 Teile 3-Sulfo-4-ethylamino-anilin,
26 Teile 3-(β-Hydroxyethylsulfonyl)-4-(γ-hydroxypropylamino)-anilin,
450 Teile Wasser,
26 Teile Chloranil,
und anstelle der unter b) angegebenen Produkte:
300 Teile 10-%-iges Oleum und
20 Teile Natriumperoxodisulfat.

Das hieraus erhältliche erfindungsgemäße Alkalisalz der Verbindung der mutmaßlichen Formel

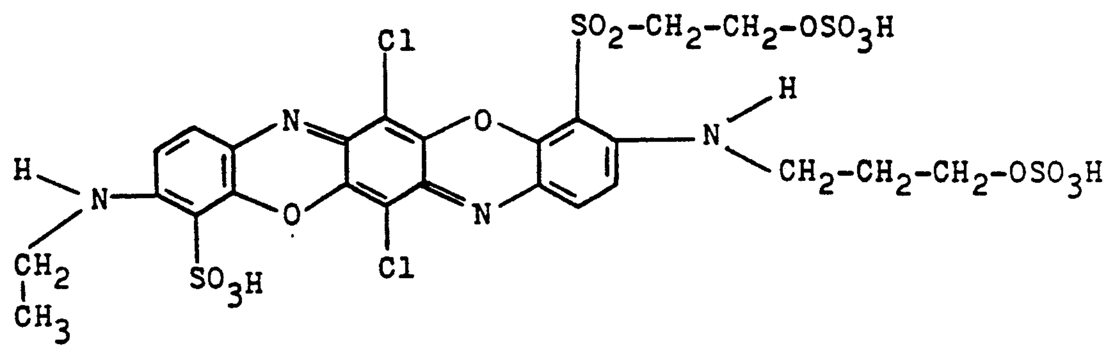

besitzt, ebenfalls gute faserreaktive Farbstoffeigenschaften und färbt insbesondere Cellulosefasermaterialien in rotstichig blauen, egalen Tönen mit guten Echtheitseigenschaften.

**Beispiele 15 bis 45**

In den nachfolgenden Tabellenbeispielen sind weitere erfindungsgemäße Triphendioxazinverbindungen entsprechend einer allgemeinen Formel (B)

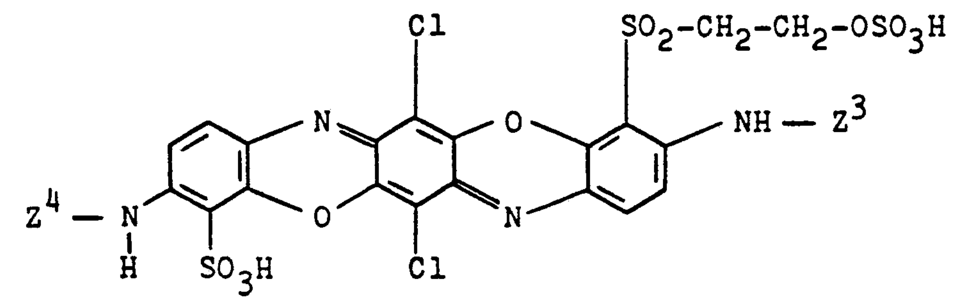

(B)

mit den entsprechenden Formelresten $Z^3$ und $Z^4$ beschrieben. Sie lassen sich in erfindungsgemäßer Weise, beispielsweise analog den obigen Ausführungsbeispielen, durch Umsetzung von Chloranil mit den Anilinverbindungen entsprechend den allgemeinen Formeln (4a) und (5a)

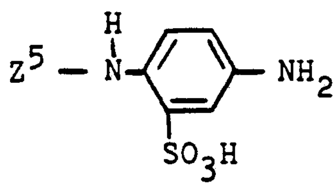

(4a)

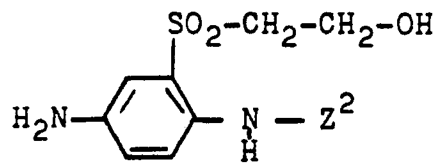

(5a)

mit $Z^5$ und $Z^2$ der in dem jeweiligen Tabellenbeispiel angegebenen Bedeutung und nachträglicher Sulfatierung und Cyclisierung und gegebenenfalls Sulfonierung herstellen. Diese erfindungsgemäßen Triphendioxazin-Verbindungen besitzen ebenfalls sehr gute faserreaktive Farbstoffeigenschaften und liefern auf den in der Beschreibung genannten Materialien, wie insbesondere Cellulosefasermaterialien, farbstarke, echte Färbungen mit dem in dem jeweiligen Tabellenbeispiel auf Baumwolle angegebenen Farbton.

| Bsp. | Verbindung der Formel (B) mit $Z^3$ gleich ... | mit $Z^4$ gleich ... | Verbindung (5a) mit $Z^2$ gleich ... | Verbindung (4a) mit $Z^5$ gleich ... | Farbton |
|---|---|---|---|---|---|
| 15 | 3-Sulfato-propyl | Wasserstoff | 3-Hydroxy-propyl | Wasserstoff | rotstichig blau |
| 16 | 2-Sulfo-ethyl | Wasserstoff | 2-Sulfo-ethyl | Wasserstoff | dito |
| 17 | 4-Sulfo-benzyl | Wasserstoff | Benzyl | Wasserstoff | dito |
| 18 | 2-(4'-Sulfato-ethoxy)-ethyl | Wasserstoff | 2-(4'-Hydroxyethoxy)-ethyl | Wasserstoff | dito |
| 19 | 2-Sulfato-1-methyl-ethyl | Wasserstoff | 2-Hydroxy-1-methyl-ethyl | Wasserstoff | dito |
| 20 | 2-Sulfato-propyl | Wasserstoff | 2-Hydroxy-propyl | Wasserstoff | dito |
| 21 | 2-Sulfato-1-ethyl-ethyl | Wasserstoff | 2-Hydroxy-1-ethyl-ethyl | Wasserstoff | dito |
| 22 | 2-(4'-Sulfatoethyl-sulfonyl-phenyl)-ethyl | Wasserstoff | 2-(4'-Hydroxyethyl-sulfonyl-phenyl)-ethyl | Wasserstoff | dito |
| 23 | 2-Sulfato-1-methyl-ethyl | 2-Sulfato-ethyl | 2-Hydroxy-1-methyl-ethyl | 2-Hydroxy-ethyl | dito |
| 24 | 2-(4'-Sulfatoethyl-sulfonyl-phenyl)-ethyl | dito | 2-(4'-Hydroxyethyl-sulfonyl-phenyl)-ethyl | dito | dito |
| 25 | 2-(2'-Sulfatoethyl-amino)-ethyl | dito | 2-(2'-Hydroxyethyl-amino)-ethyl | dito | dito |
| 26 | 2-Sulfato-1-ethyl-ethyl | dito | 2-Hydroxy-1-ethyl-ethyl | dito | rotstichig blau |
| 27 | 2,3-Disulfato-propyl | dito | 2,3-Dihydroxy-propyl | dito | dito |
| 28 | 3-Sulfato-propyl | dito | 3-Hydroxy-propyl | dito | dito |
| 29 | 2-Sulfato-propyl | dito | 2-Hydroxy-propyl | dito | dito |
| 30 | 2-Sulfo-ethyl | dito | 2-Sulfo-ethyl | dito | dito |
| 31 | 2-(4'-Sulfophenyl)-ethyl | dito | 2-Phenyl-ethyl | dito | dito |
| 32 | 2-Sulfato-1-methyl- | Propyl | 2-Hydroxy-1-methyl- | Propyl | dito |

| | | | | | |
|---|---|---|---|---|---|
| | ethyl | | ethyl | | |
| 33 | 3-Sulfato-propyl | dito | 3-Hydroxy-propyl | dito | dito |
| 34 | 2-Sulfato-propyl | dito | 2-Hydroxy-propyl | dito | dito |
| 35 | 2-Sulfato-ethyl | dito | 2-Hydroxy-ethyl | dito | dito |
| 36 | 2-Sulfo-ethyl | dito | 2-Sulfo-ethyl | dito | dito |
| 37 | 2,3-Disulfato-propyl | dito | 2,3-Hydroxy-propyl | dito | dito |
| 38 | 2-Sulfato-ethyl | Methyl | 2-Hydroxy-ethyl | Methyl | dito |
| 39 | 2-Sulfato-propyl | Methyl | 2-Hydroxy-propyl | Methyl | dito |
| 40 | 2-Sulfato-1-ethyl-ethyl | Methyl | 2-Hydroxy-1-ethyl-ethyl | Methyl | dito |
| 41 | 2-Sulfato-1-methyl ethyl | Methyl | 2-Hydroxy-1-methyl-ethyl | Methyl | rotstichig blau |
| 42 | 3-Sulfato-propyl | Methyl | 3-Hydroxy-propyl | Methyl | dito |
| 43 | 2-(2'-Sulfato-ethoxy)-ethyl | Methyl | 2-(2'-Hydroxy-ethoxy)-ethyl | Methyl | dito |
| 44 | 4-Sulfobenzyl | Methyl | Benzyl | Methyl | dito |
| 45 | 2-Sulfo-ethyl | Methyl | 2-Sulfo-ethyl | Methyl | dito |

**Beispiel 46**

Man verfahrt gemäß der Verfahrensweise des Beispieles 1, setzt jedoch anstelle der Komponenten im Abschnitt a) folgende ein:

| | |
|---|---|
| 25 Teile | 3-Sulfo-4-(γ-hydroxypropylamino)-anilin, |
| 26 Teile | 3-(β-Hydroxyethylsulfonyl)-4-(β-hydroxyethylamino)-anilin, |
| 350 Teile | Wasser, |
| 25 Teile | Chloranil, |

und anstelle der Komponenten des Abschnittes b) die folgenden:

| | |
|---|---|
| 27 Teile | des unter a) erhaltenen Anils, |
| 146 Teile | 100-%-iger Schwefelsäure, |
| 146 Teile | 20-%-ges Oleum, |
| 20 Teile | Natriumperoxodisulfat. |

Es wird das erfindungsgemäße (elektrolythaltige) Alkalimetallsalz der Verbindung der mutmaßlichen Formel

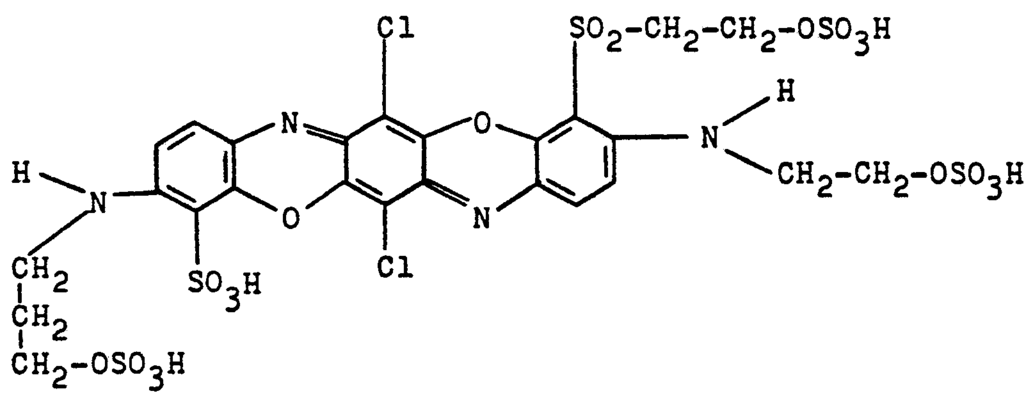

erhalten, die ebenfalls sehr gute faserreaktive Farbstoffeigenschaften zeigt und nach den üblichen Färbeweisen farbstarke und hochegale Färbungen in blauen, echten Tönen liefert. Die erfindungsgemäße Verbindung besitzt in wäßriger Lösung ein Absorptionsmaximum von 613 nm.

**Beispiele 47 bis 76**

In den nachfolgenden Tabellenbeispielen sind weitere erfindungsgemäße Triphendioxazin-Verbindungen entsprechend der oben angegebenen allgemeinen Formel (B) mit den Formelresten $Z^3$ und $Z^4$ beschrieben. Sie lassen sich in erfindungsgemäßer Weise, beispielsweise analog dem Ausführungsbeispiel 46, durch Umsetzung von Chloranil mit den Anilinverbindungen entsprechend den oben angegebenen Formeln (4a) und

(5a) mit $Z^2$ und $Z^5$ der in dem jeweiligen Tabellenbeispiel angegebenen Bedeutung und nachträglicher Sulfatierung und Cyclisierung und gegebenenfalls Sulfonierung herstellen. Diese erfindungsgemäßen Triphendioxazinverbindungen besitzen ebenfalls sehr gute faserreaktive Farbstoffeigenschaften und liefern auf den in der Beschreibung genannten Materialien, wie insbesondere Cellulosefasermaterialien, farbstarke, echte Färbungen mit dem in dem jeweiligen Tabellenbeispiel auf Baumwolle angegebenen Farbton. Der in Beispiel 58 angegebene Wellenlängenwert stellt das Absorptionsmaximum, gemessen in wäßriger Lösung, des aus der Synthese erhaltenen Farbstoffproduktes dar.

| Bsp. | Verbindung der Formel (B) mit $Z^3$ gleich ... | mit $Z^4$ gleich ... | Verbindung (5a) mit $Z^2$ gleich ... | Verbindung (4a) mit $Z^5$ gleich | Farbton |
|---|---|---|---|---|---|
| 47 | 2-Sulfato-1-ethyl-ethyl | 3-Sulfato-propyl | 2-Hydroxy-1-ethyl-ethyl | 3-Hydroxy-propyl | rotstichig blau |
| 48 | 2-Sulfato-propyl | dito | 2-Hydroxy-propyl | dito | dito |
| 49 | 3-Sulfato-propyl | dito | 3-Hydroxy-propyl | dito | dito |
| 50 | 2-Sulfato-1-methyl-ethyl | dito | 2-Hydroxy-1-methyl-ethyl | dito | dito |
| 51 | 2,3-Disulfato-propyl | dito | 2,3-Dihydroxy-propyl | dito | dito |
| 52 | Phenyl | dito | Phenyl | dito | dito |
| 53 | 2-Sulfo-ethyl | dito | 2-Sulfo-ethyl | dito | dito |
| 54 | 2-(2'-Sulfato-ethoxy)-ethyl | dito | 2-(2'-Hydroxy-ethoxy)-ethyl | dito | dito |
| 55 | 2-(2'-Sulfato-ethylsulfonyl-phenyl)-ethyl | dito | 2-(2'-Hydroxy-ethylsulfonyl-phenyl)-ethyl | dito | dito |
| 56 | 2-Sulfato-1-methyl-ethyl | 2-Sulfato-propyl | 2-Hydroxy-1-methyl-ethyl | 2-Hydroxy-propyl | dito |
| 57 | 2-(2'-Sulfatoethyl-amino)-ethyl | dito | 2-(2'-Hydroxyethyl-amino)-ethyl | dito | dito |
| 58 | 2-Sulfato-ethyl | dito | 2-Hydroxy-ethyl | dito | dito (612 nm) |
| 59 | 2-Sulfato-propyl | dito | 2-Hydroxy-propyl | dito | dito |
| 60 | 3-Sulfato-propyl | dito | 3-Hydroxy-propyl | dito | dito |
| 61 | 2-(4'-Sulfophenyl)-ethyl | 2-Sulfato-propyl | 2-Phenyl-ethyl | 2-Hydroxy-propyl | rotstichig blau |
| 62 | 2-Sulfato-1-ethyl-ethyl | dito | 2-Hydroxy-1-ethyl-ethyl | dito | dito |
| 63 | 2-(4'-Sulfatoethyl-sulfonyl-phenyl)-ethyl | dito | 2-(4'-Hydroxyethyl-sulfonyl-phenyl)-ethyl | dito | dito |
| 64 | 2,3-Disulfato-propyl | dito | 2,3-Dihydroxy-propyl | dito | dito |
| 65 | 2-Sulfo-ethyl | dito | 2-Sulfo-ethy1 | dito | dito |
| 66 | Phenyl | dito | Phenyl | dito | dito |
| 67 | 2-Sulfato-ethyl | Ethyl | 2-Hydroxy-ethyl | Ethul | dito |
| 68 | 2-Sulfato-propyl | dito | 2-Hydroxy-propyl | dito | dito |
| 69 | 2-Sulfato-1-ethyl-ethyl | dito | 2-Hydroxy-1-ethyl-ethyl | dito | dito |
| 70 | 2-(4'-β-Sulfato-ethylsulfonyl-phenyl)-ethyl | dito | 2-(4'-β-Hydroxy-ethylsulfonyl-phenyl)-ethyl | dito | dito |
| 71 | Phenyl | dito | Phenyl | dito | dito |
| 72 | 4-Sulfobenzyl | dito | Benzyl | dito | dito |
| 73 | 2-Sulfo-ethyl | dito | 2-Sulfo-ethyl | dito | dito |
| 74 | 2-Sulfato-1-methyl-ethyl | dito | 2-Hydroxy-1-methyl-ethyl | dito | dito |
| 75 | 2-(2'-Sulfato-ethylamino)-ethyl | dito | 2-(2'-Hydroxy-ethylamino)-ethyl | dito | dito |
| 76 | 2,3-Disulfato-propyl | Ethyl | 2,3-Dihydroxy-propyl | Ethyl | rotstichig blau |

**Beispiel 77**

Man verfährt gemäß der Verfahrensweise des Beispieles 1, verwendet jedoch als Reaktionskomponenten im Abschnitt a) die folgenden:

| | |
|---|---|
| 21 Teile | 3-Sulfo-4-methoxy-anilin, |
| 23 Teile | 3-(β-Hydroxyethylsulfonyl)-4-methoxy-anilin, |
| 120 Teile | Wasser, |
| 26 Teile | Chloranil, |

und im Abschnitt b) anstelle der dort angegebenen Komponenten die folgenden:

| | |
|---|---|
| 9 Teile | des unter a) erhaltenen Anils, |
| 130 Teile | 10-%-iges Oleum, |
| 7 Teile | Natriumperoxodisulfat. |

Es wird als erfindungsgemäße Verbindung das Natriumsalz der Verbindung der mutmaßlichen Formel

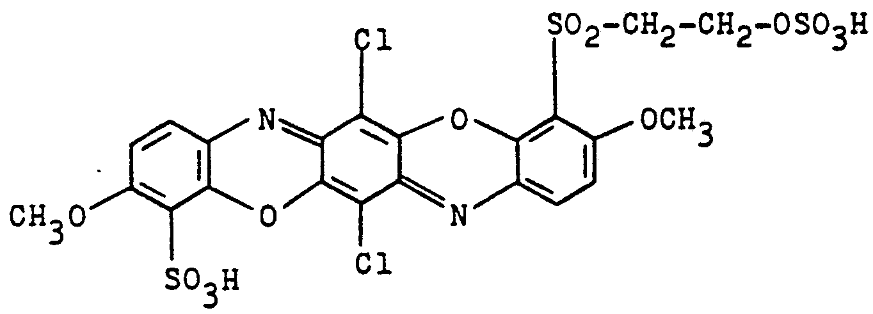

erhalten,
das in wäßriger Lösung ein Absorptionsmaximum bei 534 nm besitzt und ebenfalls sehr gute faserreaktive Farbstoffeigenschaften aufweist. Gemäß den in der Technik für faserreaktive Farbstoffe üblichen Applikations- und Fixiermethoden liefert es blaustichig rote Färbungen und Drucke mit guten Echtheiten, von denen insbesondere die Lichtechtheit und alkalische Schweißlichtechtheit hervorgehoben werden können.

**Beispiele 78 bis 80**

Zur Herstellung einer erfindungsgemäßen Verbindung verfährt man analog der Verfahrensweise des Beispieles 77, verwendet jedoch anstelle der beiden für Abschnitt a) erwähnten Anilinverbindungen in äquivalenter Menge die folgenden Verbindungen:

| | |
|---|---|
| Bsp. 78: | 3-Sulfo-4-methoxy-anilin,<br>3-(β-Hydroxyethylsulfonyl)-4-(β-hydroxyethoxy)-anilin; |
| Bsp. 79: | 3-Sulfo-4-phenoxy-anilin,<br>3-(β-Hydroxyethylsulfonyl)-4-methoxy-anilin; |
| Bsp. 80: | 3-Sulfo-4-phenoxy-anilin,<br>3-(β-Hydroxyethylsulfonyl)-4-(β-hydroxyethoxy)-anilin. |

Die erfindungsgemäßen Verbindungen werden in Form ihrer Alkalimetallsalze erhalten; sie besitzen, in Form der freien Säure geschrieben, die Formel:

**Bsp. 78**

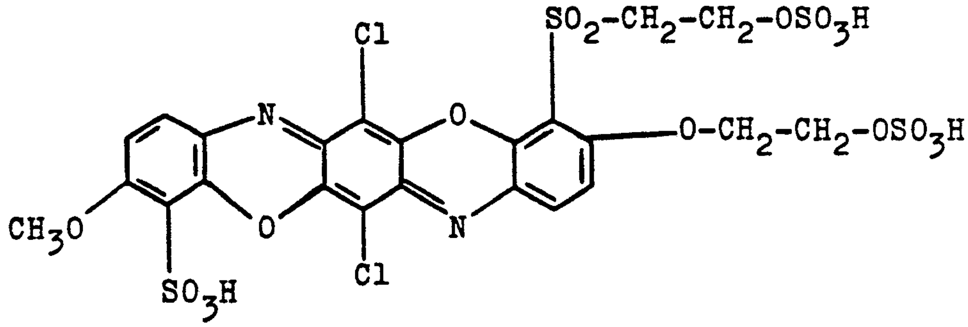

($\lambda_{max}$ des Syntheseproduktes in wäßriger Lösung 533 nm)

**Bsp. 79**

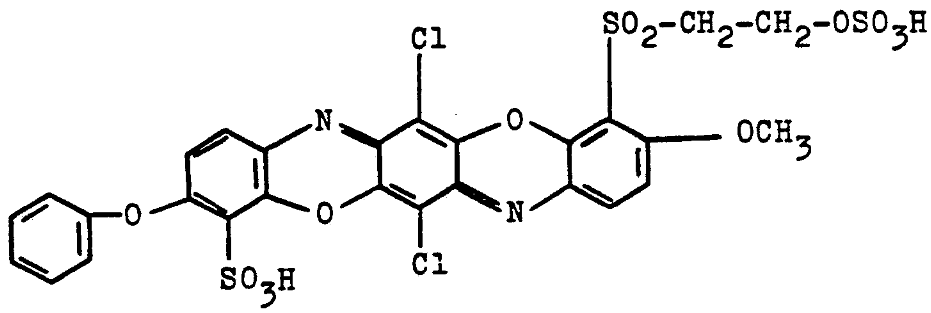

**Bsp. 80**

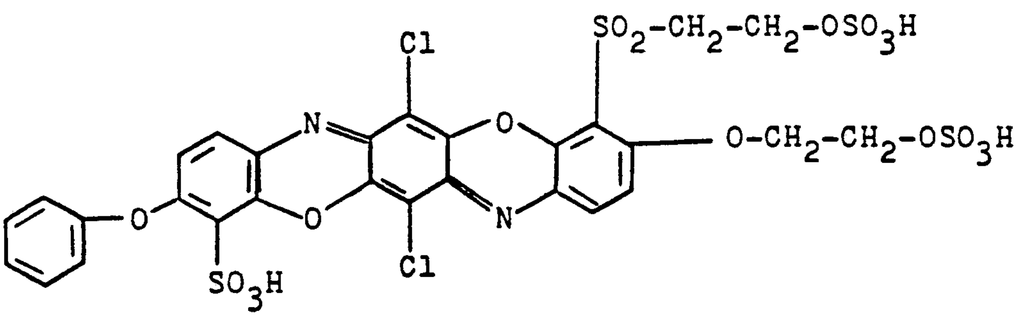

Die drei erfindungsgemäßen Verbindungen der Beispiele 78 bis 80 besitzen sehr gute faserreaktive Farbstoffeigenschaften. Sie färben nach den in der Technik für faserreaktive Farbstoffe üblichen Verfahren insbesondere Cellulosefasermaterialien, wie Baumwolle, in brillanten blaustichigen Rottönen in hoher Farbstärke und sehr guter Egalität sowie in guten Echtheiten, von denen insbesondere die gute Lichtechtheit und alkalische Schweißlichtechtheit hervorgehoben werden können.

**Beispiele 81 bis 106**

In den nachfolgenden Tabellenbeispielen sind weitere erfindungsgemäße Triphendioxazin-Verbindungen entsprechend einer allgemeinen Formel (C)

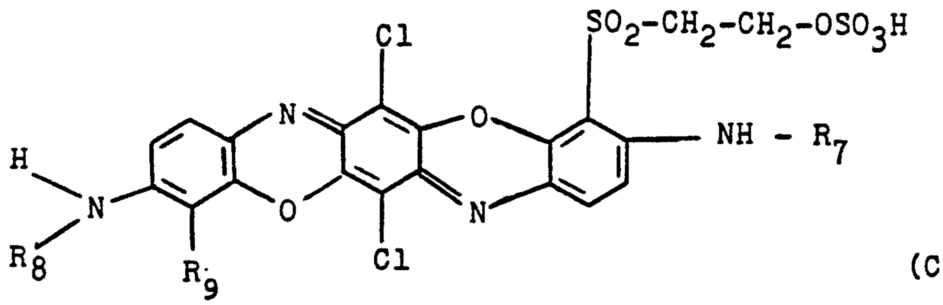

(C)

mit den entsprechenden Formelresten $R_7$, $R_8$ und $R_9$ beschrieben. Sie lassen sich in erfindungsgemäßer Weise, beispielsweise analog den obigen Ausführungsbeispielen, durch Umsetzung von Chloranil mit den Anilinverbindungen entsprechend den allgemeinen Formeln (4b) und (5b)

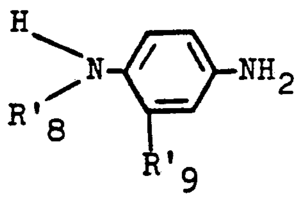

(4b)

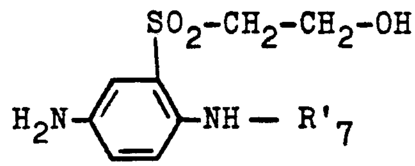

(5b)

mit $R'_7$, $R'_8$ und $R'_9$ der in dem jeweiligen Tabellenbeispiel angegebenen Bedeutungen und nachträglicher Sulfatierung und Cyclisierung und gegebenenfalls Sulfonierung herstellen. Diese erfindungsgemäßen Triphendioxazin-Verbindungen besitzen ebenfalls sehr gute faserreaktive Farbstoffeigenschaften und liefern auf den in der Beschreibung genannten Materialien, wie insbesondere Cellulosefasermaterialien, farbstarke, echte Färbungen mit dem in dem jeweiligen Tabellenbeispiel auf Baumwolle angegebenen Farbton.

Die in Tabellenbeispielen angegebenen Wellenlängenwerte sind Absorptionsmaxima, gemessen in wäßriger Lösung, der aus der Synthese erhaltenen Farbstoffprodukte.

| | Verbindung (C) mit | | | aus den Ausgangsverbindungen (4b) und (5b) mit | | | |
|---|---|---|---|---|---|---|---|
| Bsp. | $R_7$ gleich ... | $R_8$ gleich ... | $R_9$ gleich ... | $R'_7$ gleich ... | $R'_8$ gleich ... | $R'_9$ gleich ... | Farbton |
| 81 | β-Sulfato-ethyl | Phenyl | Sulfo | β-Hydroxy-ethyl | Phenyl | Sulfo | rotstichig blau (609 nm) |
| 82 | 2-Sulfato-1-ethyl-ethyl | Phenyl | Sulfo | 2-Hydroxy-1-ethyl-ethyl | Phenyl | Sulfo | dito |
| 83 | 2(2'-Sulfato-ethylsulfonyl-phenyl)-ethyl | dito | Sulfo | 2-(2'-Hydroxy-ethylsulfonyl-phenyl)-ethyl | Phenyl | Sulfo | dito |
| 84 | 3-Sulfato-propyl | dito | Sulfo | 3-Hydroxy-propyl | Phenyl | Sulfo | dito |
| 85 | 2-Sulfato-1-methyl-ethyl | dito | Sulfo | 2-Hydroxy-1-methyl-ethyl | Phenyl | Sulfo | dito |
| 86 | 2-Sulfato-propyl | dito | Sulfo | 2-Hydroxy-propyl | Phenyl | Sulfo | dito |
| 87 | 2-Sulfo-ethyl | dito | Sulfo | 2-Sulfo-ethyl | Phenyl | Sulfo | dito |
| 88 | 2-(4'-Sulfo-phenyl)-ethyl | dito | Sulfo | 2-Phenyl-ethyl | Phenyl | Sulfo | dito |
| 89 | 2-Sulfato-ethyl | 2-Sulfo-ethyl | (β-Sulfo-ethyl)-sulfamoyl | 2-Hydroxy-ethyl | 2-Sulfo-ethyl | (β-Sulfo ethyl)-sulfamoyl | dito |
| 90 | 2-Sulfato-propyl | dito | dito | 2-Hydroxy-propyl | dito | dito | dito |
| 91 | 2-Sulfato-1-ethyl-ethyl | dito | dito | 2-Hydroxy-1-ethyl-ethyl | dito | dito | dito |
| 92 | 4-Benzyl | 2-Sulfo-ethyl | (β-Sulfo-ethyl)- | Benzyl | 2-Sulfo-ethyl | (β-Sulfo-ethyl)- | rotstichig blau |

| | | | | | | | |
|---|---|---|---|---|---|---|---|
| 93 | 2-Sulfo-ethyl | 2-Sulfo-ethyl | sulfamoyl (β-Sulfo-ethyl)-sulfamoyl | 2-Sulfo-ethyl | 2-Sulfo-ethyl | sulfamoyl (β-Sulfo-ethyl)-sulfamoyl | rotstichig blau |
| 94 | 2-(2'-Sulfato-ethoxy)-ethyl | dito | dito | 2-(2'-Hydroxy-ethoxy)-ethyl | dito | dito | dito |
| 95 | 3-Sulfato-propyl | dito | dito | 3-Hydroxy-propyl | dito | dito | dito |
| 96 | 2-Sulfato-propyl | 2-(4'-Sulfo-phenyl)-ethyl | Sulfo | 2-Hydroxy-propyl | 2-Phenyl-ethyl | Sulfo | dito |
| 97 | 3-Sulfato-propyl | dito | dito | 3-Hydroxy-propyl | dito | dito | dito |
| 98 | 2-(2'-Sulfato-ethoxy)-ethyl | dito | dito | 2-(2'-Hydroxy-ethoxy)-ethyl | dito | dito | dito |
| 99 | 2-Sulfo-ethyl | dito | dito | 2-Sulfo-ethyl | dito | dito | dito |
| 100 | Phenyl | dito | dito | Phenyl | dito | dito | dito |
| 101 | 2-Sulfato-1-methyl-ethyl | dito | dito | 2-Hydroxy-1-methyl-ethyl | dito | dito | dito |
| 102 | 2-Sulfato-ethyl | dito | dito | 2-Hydroxy-ethyl | dito | dito | dito (610 nm) |
| 103 | 2-Sulfato-ethyl | 2-Sulfo-ethyl | dito | dito | 2-Sulfo-ethyl | Sulfo | dito |
| 104 | 3-Sulfato-propyl | dito | dito | 3-Hydroxy-propyl | dito | Sulfo | dito |
| 105 | 2-Sulfoethyl | dito | dito | 2-Sulfoethyl | dito | Sulfo | dito |
| 106 | 2-Sulfato-propyl | dito | dito | 2-Sulfopropyl | dito | Sulfo | dito |

**Patentansprüche**

1. Wasserlösliche Triphendioxazin-Verbindung entsprechend der allgemeinen Formel (1)

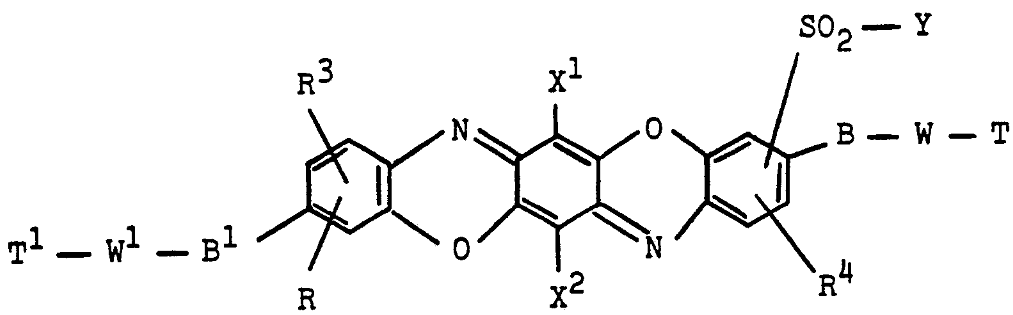

(1)

in welcher bedeuten:

R ist ein Wasserstoffatom oder eine wasserlöslichmachende Gruppe, wie eine Carboxy- oder Sulfogruppe oder eine durch eine saure Gruppe substituierte Alkylgruppe von 1 bis 6 C-Atomen, oder eine gegebenenfalls substituierte Sulfonamidgruppe;

B ist ein Sauerstoff- oder Schwefelatom oder eine Aminogruppe der Formel -NH- oder -N(R')-, in welcher

R' eine Alkylgruppe von 1 bis 8 C-Atomen ist, die substituiert sein kann, oder eine Cycloalkylgruppe von 5 bis 8 C-Atomen mit gegebenenfalls 1 bis 3 Methylgruppen und/oder einer Aminogruppe, Alkanoylaminogruppe von 2 bis 5 C-Atomen oder Benzoylaminogruppe als Substituenten ist oder einen Phenylrest bedeutet, der durch 1, 2 oder 3 Substituenten aus der Gruppe Sulfo, Halogen, Alkyl von 1 bis 4 C-Atomen, Alkoxy von 1 bis 4 C-Atomen, Nitro, eine Gruppe der Formel $-SO_2-Y'$ mit Y' der nachstehend angegebenen Bedeutung, Alkylamino mit einem Alkylrest von 1 bis 4 C-Atomen, Dialkylamino mit Alkylresten von jeweils 1 bis 4 C-Atomen, Alkanoylamino von 2 bis 5 C-Atomen und Benzoylamino substituiert sein kann, oder ein Naphthylrest ist, der durch 1, 2 oder 3 Sulfogruppen und/oder eine Gruppe der Formel $-SO_2-Y'$ substituiert sein kann;

$B^1$ besitzt eine der für B angegebenen Bedeutungen, wobei $B^1$ zu B gleich oder von B verschieden ist;

W ist ein bivalenter aliphatischer, araliphatischer oder aromatischer Rest, der durch 1 oder 2 Heterogruppen, die aus Gruppen der Formel -O-, -NH- und -N(R')- mit R' der obengenannten Bedeutung ausgewählt sind,

unterbrochen sein kann;

$W^1$ besitzt eine der für W angegebenen Bedeutungen, wobei $W^1$ zu W gleich oder von W verschieden ist;

T ist ein Wasserstoffatom oder eine Sulfo-, Sulfato-, Phosphato- oder Carboxygruppe;

$T^1$ besitzt eine der für T angegebenen Bedeutungen, wobei $T^1$ zu T gleich oder von T verschieden ist, wobei $T^1$ jedoch zwingend eine dieser wasserlöslichmachenden Gruppen ist, wenn R ein Wasserstoffatom bedeutet;

oder die Reste -B-W-T und $T^1$-$W^1$-$B^1$-, zueinander gleich oder voneinander verschieden, bedeuten die Aminogruppe oder einen gegebenfalls ein oder zwei weiteren Heteroatome enthaltenden 5- bis 8-gliedrigen heterocyclischen Rest;

$R^3$ und $R^4$ sind zueinander gleich oder voneinander verschieden und jedes ist ein Wasserstoffatom oder Alkyl von 1 bis 6 C-Atomen, Alkoxy von 1 bis 5 C-Atomen, Halogen, Carboxy oder Sulfo;

$X^1$ ist ein Wasserstoffatom oder ein Halogenatom, eine Cycloalkylgruppe, eine Aralkyloxygruppe, eine Alkoxygruppe von 1 bis 4 C-Atomen) eine Aryloxygruppe, eine Alkylgruppe von 1 bis 4 C-Atomen, eine Arylgruppe, eine Aralkylgruppe, eine Cyangruppe, eine Carboxygruppe, eine Carbalkoxygruppe von 2 bis 5 C-Atomen, eine N-Alkyl-carbamoyl-Gruppe oder N,N-Dialkyl-carbamoyl-Gruppe mit Alkylresten von jeweils 1 bis 4 C-Atomen, eine N-Aryl-carbamoyl-Gruppe, eine Alkanoylaminogruppe von 2 bis 5 C-Atomen oder eine Aroylaminogruppe, wobei die Arylreste in diesen Substituenten noch durch 1 oder 2 Substituenten aus der Gruppe Halogen, Nitro, Alkyl von 1 bis 4 C-Atomen, Alkoxy von 1 bis 4 C-Atomen, Carboxy und Sulfo substituiert sein können;

$X^2$ ist mit $X^1$ gleich oder von $X^1$ verschieden und hat eine der für $X^1$ angegebenen Bedeutungen;

Y ist die Vinylgruppe oder eine Ethylgruppe, die in β-Stellung einen durch ein Alkali eliminierbaren Substituenten enthält;

Y' ist die Vinylgruppe oder eine Ethylgruppe die in β-Stellung einen durch ein Alkali eliminierbaren Substituenten enthält;

von den Sulfo- und Sulfatogruppen, die im Molekül (1) enthalten sein können, enthält das Molekül (1) zwingend mindestens eine, bevorzugt mindestens zwei davon.

2. Verbindung nach Anspruch 1, in welcher $X^1$ und $X^2$ beide ein Wasserstoffatom, eine Alkanoylaminogruppe von 2 bis 5 C-Atomen, eine Phenoxygruppe, die durch Chlor substituiert sein kann, eine Alkoxygruppe von 1 bis 4 C-Atomen, eine Alkylgruppe von 1 bis 4 C-Atomen, ein Chloratom oder Bromatom sind.

3. Verbindung nach Anspruch 1, in welcher $X^1$ und $X^2$ beide ein Chlor oder Bromatom bedeuten.

4. Verbindung nach Anspruch 1, 2 oder 3, in welcher die Reste -B-W-T oder $T^1$-$W^1$-$B^1$- oder beide, zueinander gleich oder voneinander verschieden, eine Aminogruppe der allgemeinen Formel

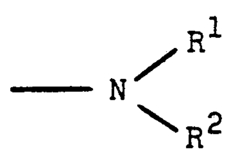

(2)

darstellen, in welcher

$R^1$ ein Wasserstoffatom ist oder eine der Bedeutungen von R' besitzt und

$R^2$ ein Wasserstoffatom oder eine Alkylgruppe von 1 bis 8 C-Atomen ist, die substituiert sein kann, oder eine Cycloalkylgruppe von 5 bis 8 C-Atomen mit gegebenenfalls 1 bis 3 Methylgruppen und/oder einer Aminogruppe, Alkanoylaminogruppe von 2 bis 5 C-Atomen oder Benzoylaminogruppe als Substituenten ist oder der Phenylrest ist, der durch 1, 2 oder 3 Substituenten aus der Gruppe Sulfo, Carboxy, Halogen, Alkyl von 1 bis 4 C-Atomen, Alkoxy von 1 bis 4 C-Atomen, Nitro, eine Gruppe der Formel $-SO_2-Y'$ mit Y' der in Anspruch 1 angegebenen Bedeutung, Alkylamino mit einem Alkylrest von 1 bis 4 C-Atomen, Dialkylamino mit Alkylresten von jeweils 1 bis 4 C-Atomen, Alkanoylamino von 2 bis 5 C-Atomen und Benzoylamino substituiert sein kann, oder ein Naphthylrest ist, der durch 1, 2 oder 3 Sulfogruppen und/oder eine Gruppe der Formel $-SO_2-Y'$ substituiert sein kann,

wobei $R^2$ zu $R^1$ gleich oder von $R^1$ verschieden ist, oder $R^1$ und $R^2$ zusammen mit dem Stickstoffatom den Piperidino-, Piperazino- oder Morpholino-Rest bilden.

5. Verbindung nach einem der Ansprüche 1 bis 4, in welchen die Formelglieder W und $W^1$, zueinander gleich oder voneinander verschieden, jedes eine Alkylengruppe von 1 bis 8 C-Atomen sind, wobei diese Alkylenkette durch 1 oder 2 Sauerstoffatome oder Aminogruppen der Formeln -NH- oder -N(R')- mit R' der in Anspruch 1 genannten Bedeutung unterbrochen sein kann, oder ein Alkylen-phenylen-, ein Phenylen-alkylen-, ein Phenylen-alkylenphenylen- oder Alkylen-phenylenalkylen-Rest ist, wobei in diesen araliphatischen Resten die Alkylenreste solche von 1 bis 4 C-Atomen sind und die Benzolkerne noch durch 1 oder 2 Substituenten aus der Gruppe Sulfo, Carboxy, Sulfamoyl, Carbamoyl, Methyl, Ethyl, Methoxy, Ethoxy, Nitro und Chlor substituiert sein können, oder ein Phenylenrest ist, der noch durch 1 oder 2 Substituenten aus der Gruppe Sulfo, Carboxy, Sulfamoyl, Carbamoyl, Methyl, Ethyl, Methoxy, Ethoxy und Chlor substituiert sein kann, oder ein Cycloalkylenrest ist.

6. Verbindung nach einem der Ansprüche 1 bis 4, in welchen W oder $W^1$ ein Alkylenrest von 2 bis 4 C-Atomen oder ein Phenylenrest, der durch 1 oder 2 Substituenten, aus der Gruppe Sulfo, Carboxy, Methyl, Methoxy, Ethoxy und Chlor substituiert sein kann, ist oder einen Alkylen-phenylen-Rest bedeutet, wobei T bzw. $T^1$ an dessen Benzolkern gebunden ist und dieser Benzolkern noch durch eine Sulfogruppe substituiert sein kann.

7. Verbindung nach einem der Ansprüche 1, 2, 5 und 6, in welchen B und/oder $B^1$ die Gruppe -NH- oder -N(R')- bedeuten, wobei R' eine Alkylgruppe von 1 bis 4 C-Atomen ist, die durch einen oder zwei Substituenten substituiert sein kann, die aus der Menge der Substituenten Hydroxy, Halogen, Sulfato, Phosphato, Sulfo, Carboxy, Carbalkoxy von 2 bis 5 C-Atomen, Alkanoylamino von 2 bis 5 C-Atomen, Alkylamino mit 1 bis 4 C-Atomen im Alkylrest, Dialkylamino mit 1 bis 4 C-Atomen in den Alkylresten, ein in den Alkylresten durch eine Hydroxy-, Sulfo-, Carboxy-, Sulfato- oder Phosphatogruppe oder eine Alkoxygruppe von 1 bis 4 C-Atomen oder eine β-Sulfatoethoxy- oder β-Sulfato-di-, -tri- oder -tetra-glykolether-Gruppe substituiertes Alkylamino oder Dialkylamino mit jeweils 1 bis 4 C-Atomen in den Alkylresten des Mono- bzw. Dialkylamins, eine Gruppe der Formel $-SO_2-Y'$ mit Y' der in Anspruch 1 angegebenen Bedeutung, Phenyl und Phenyl, das durch Substituenten aus der Gruppe Alkyl von 1 bis 4 C-Atomen, Alkoxy von 1 bis 4 C-Atomen, Halogen, Nitro, Sulfo, Carboxy, eine Gruppe der Formel $-SO_2-Y'$ mit Y' der oben angegebenen Bedeutung, Amino, Alkylamino mit einem Alkylrest von 1 bis 4 C-Atomen, Alkanoylamino von 2 bis 5 C-Atomen, Benzoylamino, Sulfobenzoylamino und/oder Carbalkoxy von 2 bis 5 C-Atomen substituiert sein kann, ausgewählt sind.

8. Verbindung nach Anspruch 4, wobei $R^1$ und $R^2$, zueinander gleich oder voneinander verschieden, jedes ein Wasserstoffatom oder eine Alkylgruppe von 1 bis 4 C-Atomen ist, die durch einen oder zwei Substituenten substituiert sein kann, die aus der Menge der Substituenten Hydroxy, Halogen, Sulfato, Phosphato, Sulfo, Carboxy, Carbalkoxy von 2 bis 5 C-Atomen, Alkanoylamino von 2 bis 5 C-Atomen, Alkylamino mit 1 bis 4 C-Atomen im Alkylrest, Dialkylamino mit 1 bis 4 C-Atomen in den Alkylresten, ein in den Alkylresten durch eine Hydroxy-, Sulfo-, Carboxy-, Sulfato- oder Phosphatogruppe oder eine Alkoxygruppe von 1 bis 4 C-Atomen oder eine β-Sulfatoethoxy- oder β-Sulfato-di-, -tri- oder -tetra-glykolether-Gruppe substituiertes Alkylamino oder Dialkylamino mit jeweils 1 bis 4 C-Atomen in den Alkylresten des Mono- bzw. Dialkylamins, eine Gruppe der Formel $-SO_2-Y'$ mit Y' der in Anspruch 1 angegebenen Bedeutung, Phenyl und Phenyl, das durch Substituenten aus der Gruppe Alkyl von 1 bis 4 C-Atomen, Alkoxy von 1 bis 4 C-Atomen, Halogen, Nitro, Sulfo, Carboxy, eine Gruppe der Formel $-SO_2-Y'$ mit Y' der oben angegebenen Bedeutung, Amino, Alkylamino mit einem Alkylrest von 1 bis 4 C-Atomen, Alkanoylamino von 2 bis 5 C-Atomen, Benzoylamino, Sulfobenzoylamino und/oder Carbalkoxy von 2 bis 5 C-Atomen substituiert sein kann, ausgewählt sind.

9. Verbindung nach Anspruch 1 der allgemeinen Formel

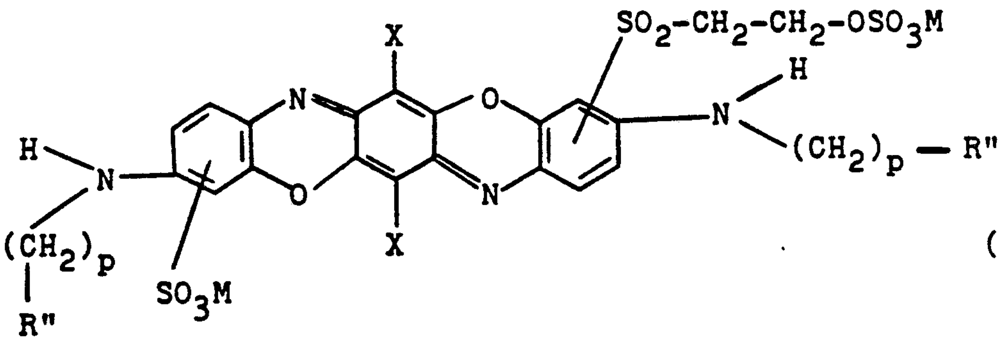

(1a)

in welcher

X für ein Bromatom oder bevorzugt ein Chloratom steht,

M ein Wasserstoffatom oder bevorzugt ein Alkalimetallatom ist,

p für die Zahl 1, 2, 3 oder 4 steht und

R'' eine Sulfo-, Sulfato- oder β-(β'-Sulfatoethoxy)-ethyl-Gruppe oder eine Monosulfophenyl- oder Disulfophenyl-Gruppe ist,

wobei beide p und beide R'' eine zueinander gleiche oder eine voneinander verschiedene Bedeutung besitzen können.

10. Verbindung nach Anspruch 1 der allgemeinen Formel

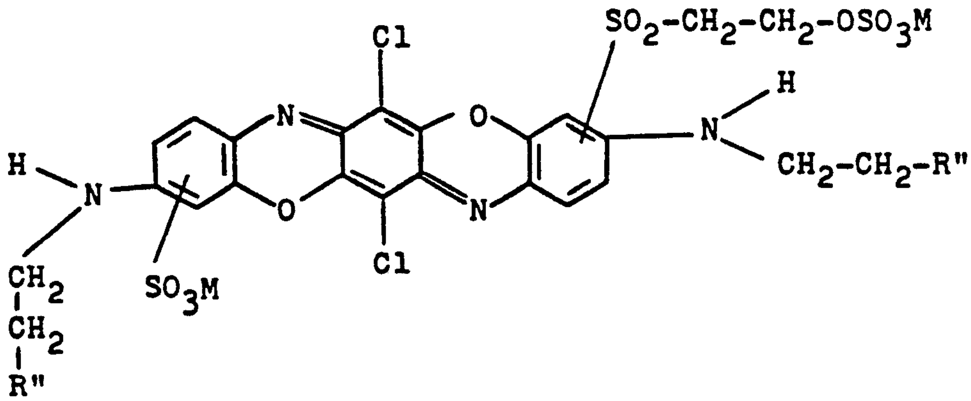

(1b)

in welcher
M für ein Wasserstoffatom und bevorzugt ein Alkalimetallatom steht und
R'' eine Sulfo- oder Sulfatogruppe bedeutet.

11. Verbindung nach einem der Ansprüche 1 bis 8, in welchen Y und Y' jeweils für eine Sulfatoethylgruppe stehen.

12. Verbindung nach Anspruch 1 der allgemeinen Formel (1c)

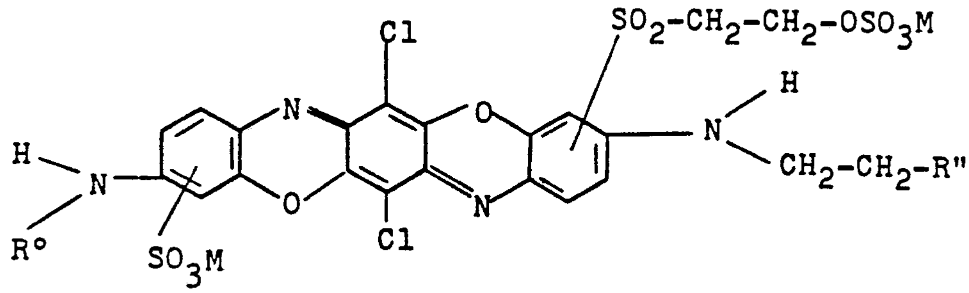

(1c)

in welcher
M ein Wasserstoffatom oder ein Alkalimetallatom ist,
R'' eine Sulfo- oder Sulfatogruppe beduetet und
R° ein Wasserstoffatom, eine Alkylgruppe von 1 bis 4 C-Atomen oder eine Monosulfophenyl- oder Monosulfobenzylgruppe ist.

13. Verbindung nach Anspruch 1 der allgemeinen Formel (1d)

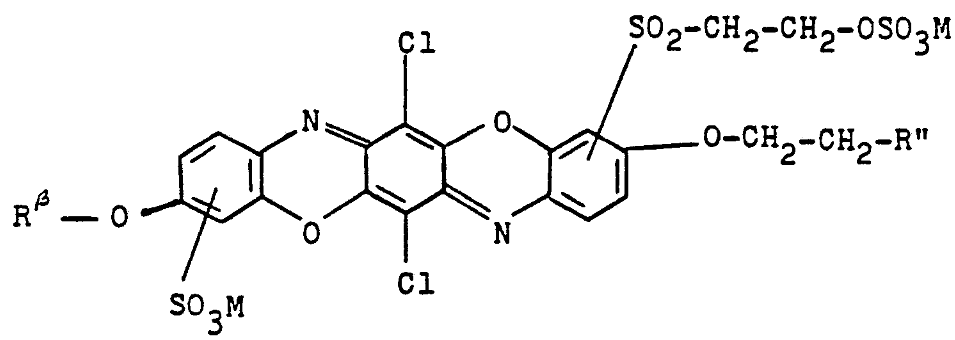

(1d)

in welcher
M ein Wasserstoffatom oder ein Alkalimetallatom ist,
R'' eine Sulfo- oder Sulfatogruppe bedeutet und
$R^{\beta}$ ein Wasserstoffatom, eine Alkylgruppe von 1 bis 4 C-Atomen, eine Phenyl-, Monosulfophenyl- oder Monosulfobenzylgruppe ist.

14. Präparationen, enthaltend Verbindungen der Formeln (1), (3a) und (3b)

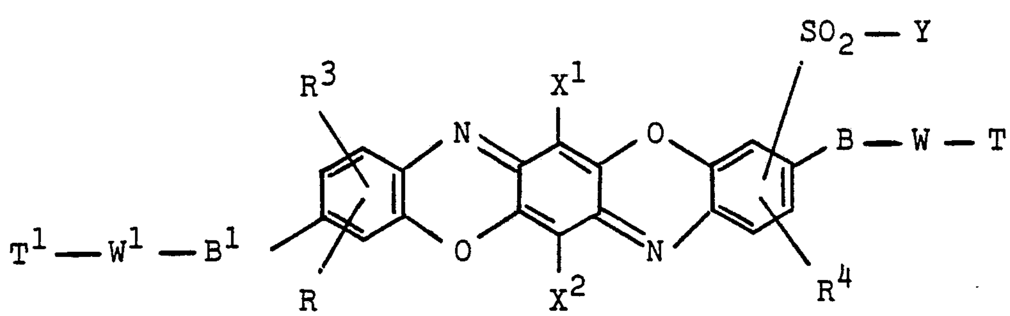

(1)

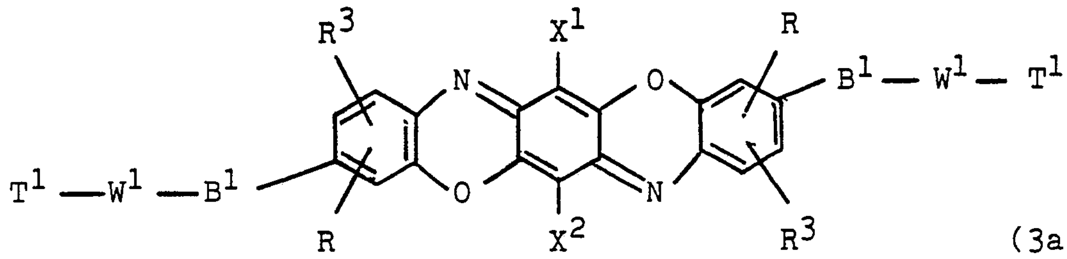

(3a)

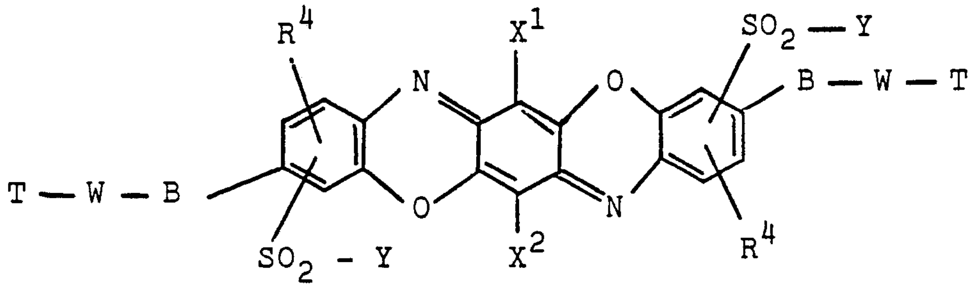

(3b)

in welchen die einzelnen Formelglieder die in Anspruch 1 genannten und/oder in mindestens einem der vorhergehenden Ansprüche 2 bis 13 genannten bevorzugten Bedeutungen haben.

15. Verfahren zur Herstellung der Verbindungen der allgemeinen Formel (1), dadurch gekennzeichnet, daß man eine Aminoverbindung der allgemeinen Formel (4) und eine Aminoverbindung der allgemeinen Formel (5)

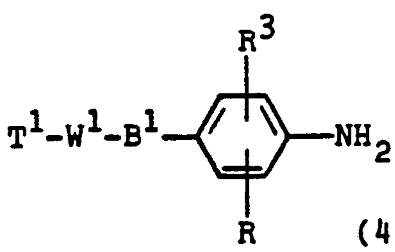

(4)

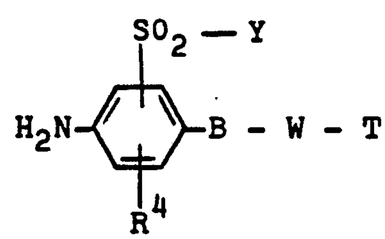

(5)

in welchen

Y die in Anspruch 1 genannte Bedeutung besitzt oder die β-Hydroxyethyl-Gruppe ist und

R, $R^3$, $R^4$, B, $B^1$, W, $W^1$, T und $T^1$ die in Anspruch 1 genannten Bedeutungen haben,

wobei substituierte Alkylgruppen in diesen Resten auch hydroxysubstituierte Alkylgruppen sein können, und wobei die Benzolkerne von (4) und (5) in einer der ortho-Stellungen zur angegebenen primären Aminogruppe zwingend nicht substituiert sein dürfen,

mit einer 1,4-Benzochinon-Verbindung der allgemeinen Formel (6)

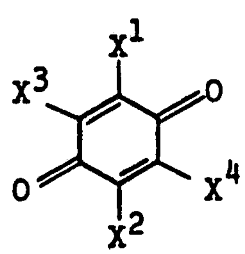

(6)

in welcher

$X^1$ und $X^2$ die in Anspruch 1 genannten Bedeutungen haben und

$X^3$ und $X^4$ zueinander gleich oder voneinander verschieden sind und jedes ein Wasserstoffatom, eine Alkoxygruppe von 1 bis 4 C-Atomen, eine Phenoxygruppe oder ein Halogenatom, ist,

wobei $X^3$ und $X^4$ auch eine zu $X^1$ und $X^2$ gleiche Bedeutung haben können, umsetzt.

16. Verfahren nach Anspruch 15, dadurch gekennzeichnet, daß in den Ausgangsverbindungen befindliche Hydroxygruppen gleichzeitig sulfatisiert und/oder in den Ausgangsverbindungen befindliche Arylreste gleichzeitig sulfoniert werden.

17. Verwendung der in Anspruch 1 genannten und definierten Verbindungen der allgemeinen Formel (1) oder der nach Anspruch 15 oder 16 hergestellten Verbindungen der allgemeinen Formel (1) zum Farben (einschließlich Bedrucken) von hydroxy- und/oder carbonamidgruppenhaltigem Material, insbesondere Fasermaterial.

18. Verfahren zum Farben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mittels eines säurebindenden Mittels fixiert, dadurch gekennzeichnet, daß man als Farbstoff eine Verbindung der in Anspruch 1 genannten und definierten allgemeinen Formel (1) einsetzt.

## Claims

1. A water-soluble triphendioxazine compound corresponding to the general formula (1)

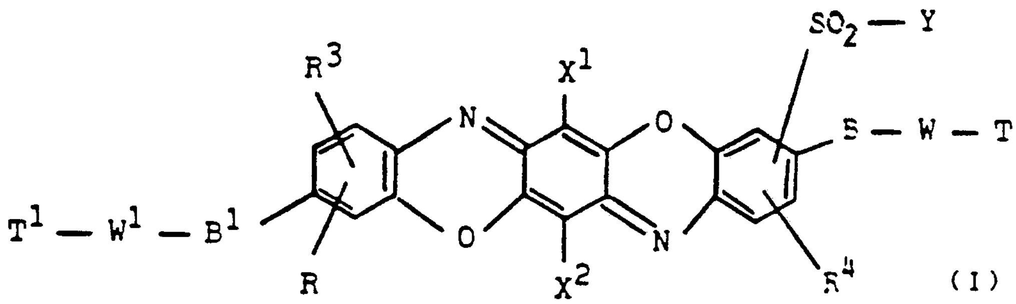

(I)

in which

R is a hydrogen atom or a water-solubilizing group, such as a carboxyl or sulfo group or an alkyl group having 1 to 6 carbon atoms which is substituted by an acidic group, or is an optionally substituted sulfonamide group;

B is an oxygen or sulfur atom or an amino group of the formula -NH- or -N(R')-,

in which

R' is an alkyl group having 1 to 8 carbon atoms, which can be substituted, or a cycloalkyl group having 5 to 8 carbon atoms, with, optionally, 1 to 3 methyl groups and/or an amino group, an alkanoylamino group having 2 to 5 carbon atoms or a benzoylamino group as substituents, or denotes a phenyl radical which can be substituted by 1, 2 or 3 substituents from the group comprising sulfo, halogen, alkyl having 1 to 4 carbon atoms, alkoxy having 1 to 4 carbon atoms, nitro, a group of the formula $-SO_2-Y'$ where Y' has the meaning stated below, alkylamino with an alkyl radical having 1 to 4 carbon atoms, dialkylamino with alkyl radicals having 1 to 4 carbon atoms in each case, alkanoylamino having 2 to 5 carbon atoms, and benzoylamino, or is a naphthyl radical which can be substituted by 1, 2 or 3 sulfo groups and/or a group of the formula $-SO_2-Y'$;

$B^1$ has one of the meanings stated for B, $B^1$ being identical to B or different from B;

W is a bivalent aliphatic, araliphatic or aromatic radical, which can be interrupted by 1 or 2 hetero groups which are selected from groups of the formula -O-, -NH- and -N(R')-, where R' has the abovementioned meaning;

$W^1$ has one of the meanings stated for W, $W^1$ being identical to W or different from W;

T is a hydrogen atom or a sulfo, sulfato, phosphato or carboxyl group;

$T^1$ has one of the meanings stated for T, $T^1$ being identical to T or different from T, but $T^1$ necessarily being one of these water-solubilizing groups when R denotes a hydrogen atom;

or the radicals -B-W-T and $T^1$-$W^1$-$B^1$-, identical to one another or different from one another, denote the amino group or a 5- to 8-membered heterocyclic radical optionally containing one or two further heteroatoms;

$R^3$ and $R^4$ are identical to one another or different from one another and each is a hydrogen atom or an alkyl having 1 to 6 carbon atoms, an alkoxy having 1 to 5 carbon atoms, a halogen, carboxyl or sulfo;

$X^1$ is a hydrogen atom or a halogen atom, a cycloalkyl group, an aralkyloxy group, an alkoxy group having 1 to 4 carbon atoms, an aryloxy group, an alkyl group having 1 to 4 carbon atoms, an aryl group, an aralkyl group, a cyano group, a carboxyl group, a carbalkoxy group having 2 to 5 carbon atoms, an N-alkylcarbamoyl group or N,N-dialkylcarbamoyl group with alkyl radicals having 1 to 4 carbon atoms in each case, an N-arylcarbamoyl

group, an alkanoylamino group having 2 to 5 carbon atoms, or an aroylamino group, the aryl radicals in these substituents being further substituted by 1 or 2 substituents from the group comprising halogen, nitro, alkyl having 1 to 4 carbon atoms, alkoxy having 1 to 4 carbon atoms, carboxyl and sulfo;

$X^2$ is identical to $X^1$ or different from $X^1$ and has one of the meanings stated for $X^1$;

Y is the vinyl group or an ethyl group which contains a substituent in the β position which can be eliminated by means of an alkali;

Y' is the vinyl group or an ethyl group which contains a substituent in the β position which can be eliminated by means of an alkali;

the molecule (1) necessarily contains at least one, preferably at least two, of the sulfo and sulfato groups which can be contained in the molecule (1).

2. A compound as claimed in claim 1, in which $X^1$ and $X^2$ are both a hydrogen atom, an alkanoylamino group having 2 to 5 carbon atoms, a phenoxy group, which can be substituted by chlorine, or are an alkoxy group having 1 to 4 carbon atoms, an alkyl group having 1 to 4 carbon aroms, a chlorine atom or a bromine atom.

3. A compound as claimed in claim 1, in which $X^1$ and $X^2$ both denote a chlorine or bromine atom.

4. A compound as claimed in claim 1, 2 or 3, in which the radicals -B-W-T or $T^1$-$W^1$-$B^1$- or both, identical to one another or different from one another, represent an amino group of the general formula

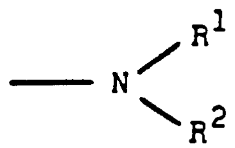

(2)

in which

$R^1$ is a hydrogen atom or has one of the meanings of R' and

$R^2$ is a hydrogen atom or an alkyl group having 1 to 8 carbon atoms, which can be substituted, or a cycloalkyl group having 5 to 8 carbon atoms, with, optionally, 1 to 3 methyl groups and/or an amino group, an alkanoylamino group having 2 to 5 carbon atoms or a benzoylamino group as substituents, or is the phenyl radical, which can be substituted by 1, 2 or 3 substituents from the group comprising sulfo, carboxyl, halogen, alkyl having 1 to 4 carbon atoms, alkoxy having 1 to 4 carbon atoms, nitro, a group of the formula $-SO_2-Y'$, where Y has the meaning stated in claim 1, alkylamino with an alkyl radical having 1 to 4 carbon atoms, dialkylamino with alkyl radicals having 1 to 4 carbon atoms in each case, alkanoylamino having 2 to 5 carbon atoms, and benzoylamino, or is a naphthyl radical, which can be substituted by 1, 2 or 3 sulfo groups and/or a group of formula $-SO_2-Y'$,

$R^2$ being identical to $R^1$ or different from $R^1$, or

$R^1$ and $R^2$, together with the nitrogen atom, form the piperidino, piperazino or morpholino radical.

5. A compound as claimed in one of claims 1 to 4, in which the formula members W and $W^1$, identical to one another or different from one another, are each an alkylene group having 1 to 8 carbon atoms, this alkylene chain being optionally interrupted by one or two oxygen atoms or amino groups of the formulae -NH- or -N(R')-, where R' has the meaning mentioned in claim 1, or are an alkylene-phenylene, a phenylene-alkylene, a phenylene-alkylene-phenylene or alkylene-phenylene-alkylene radical, where the alkylene radicals in these araliphatic radicals are those having 1 to 4 carbon atoms and the benzene nuclei are optionally substituted by 1 or 2 substituents from the group comprising sulfo, carboxyl, sulfamoyl, carbamoyl, methyl, ethyl, methoxy, ethoxy, nitro and chlorine, or is a phenylene radical which can be substituted by 1 or 2 substituents from the group comprising sulfo, carboxyl, sulfamoyl, carbamoyl, methyl, ethyl, methoxy, ethoxy and chlorine, or is a cycloalkylene radical.

6. A compound as claimed in one of claims 1 to 4, in which W or $W^1$ is an alkylene radical having 2 to 4 carbon atoms or a phenylene radical, which can be substituted by 1 or 2 substituents from the group comprising sulfo, carboxyl, methyl, methoxy, ethoxy and chlorine, or denotes an alkylene-phenylene radical, where T or $T^1$ is bonded to its benzene nucleus and this benzene nucleus can be further substituted by a sulfo group.

7. A compound as claimed in one of claims 1, 2, 5 and 6, in which B and/or $B^1$ denote the group -NH- or $-N(R^1)-$, $R^1$ being an alkyl group having 1 to 4 carbon atoms, which can be substituted by 1 or 2 substituents which are selected from a series of substituents comprising hydroxyl, halogen, sulfato, phosphato, sulfo, carboxyl, carbalkoxy having 2 to 5 carbon atoms, alkanoylamino having 2 to 5 carbon atoms, alkylamino having 1 to 4 carbon atoms in the alkyl radical, dialkylamino having 1 to 4 carbon atoms in the alkyl radicals, an alkylamino or dialkylamino which both are substituted in the alkyl radicals by a hydroxyl, sulfo, carboxyl, sulfato or phosphato group or an alkoxy group having 1 to 4 carbon atoms or a β-sulfatoethoxy or β-sulfato-di-, -tri- or -tetraglycol ether group, and having 1 to 4 carbon atoms in each of the alkyl radicals of the mono- or dialkylamine, a group of the formula $-SO_2-Y'$ where Y' has the meaning stated in claim 1, phenyl and phenyl which can be substituted by substituents from the group comprising alkyl having 1 to 4 carbon atoms, alkoxy having 1 to 4 carbon atoms, halogen, nitro, sulfo, carboxyl, a group of the formula $-SO_2-Y'$ where Y' has the abovementioned meaning, amino, alkylamino with an alkyl radical having 1 to 4 carbon atoms, alkanoylamino having 2 to 5 carbon atoms, benzoylamino, sulfobenzoylamino and/or carbalkoxy having 2 to 5 carbon atoms.

8. A compound as claimed in claim 4, in which $R^1$ and $R^2$, identical to one another or different from one another, are a hydrogen atom or an alkyl group having 1 to 4 carbon atoms, which can be substituted by 1 or 2 substitutents which are selected from a series of substituents comprising hydroxyl, halogen, sulfato, phosphato, sulfo, carboxyl, carbalkoxy having 2 to 5 carbon atoms, alkanoyl amino having 2 to 5 carbon atoms, alkylamino having 1 to 4 carbon atoms in the alkyl radical, dialkylamino having 1 to 4 carbon atoms in the alkyl radicals, an alkylamino or dialkylamino which both are substituted in the alkyl radicals by a hydroxyl, sulfo, carboxyl, sulfato or phosphato group or an alkoxy group having 1 to 4 carbon atoms or a β-sulfatoethoxy or β-sulfato-di-, -tri- or -tetraglycol ether group, and having 1 to 4 carbon atoms in each of the alkyl radicals of the mono- or dialkylamine, a group of the formula $-SO_2-Y'$ where Y' has the meaning stated in claim 1, phenyl and phenyl which can be substituted by substituents from the group comprising alkyl having 1 to 4 carbon atoms, alkoxy having 1 to 4 carbon atoms, halogen, nitro, sulfo, carboxyl, a group of the formula $-SO_2-Y'$ where Y' has the abovementioned meaning, amino, alkylamino with an alkyl radical having 1 to 4 carbon atoms, alkanoylamino having 2 to 5 carbon atoms, benzoylamino, sulfobenzoylamino and/or carbalkoxy having 2 to 5 carbon atoms.

9. A compound as claimed in claim 1 of the general formula

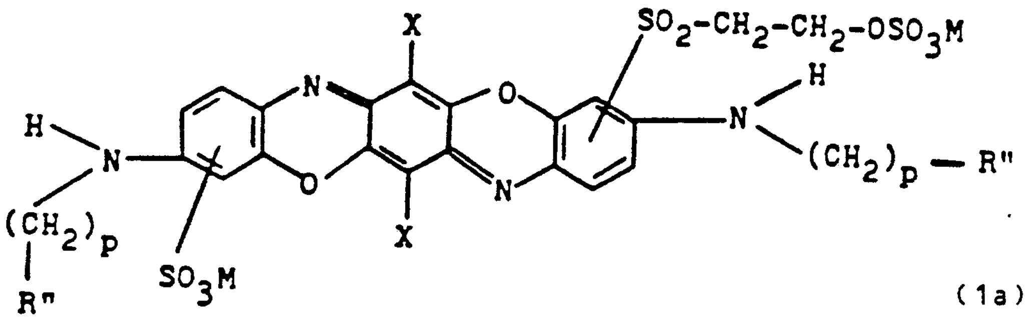

(1a)

in which

X represents a bromine atom or, preferably, a chlorine atom,

M is a hydrogen atom or, preferably, an alkali metal atom,

p represents the number 1, 2, 3 or 4 and

R'' is a sulfo, sulfato or β-(β'-sulfatoethoxy)ethyl group or a monosulfophenyl or disulfophenyl group, where both p and both R'' can have meanings which are identical to one another or different from one another.

10. A compound as claimed in claim 1 of the general formula

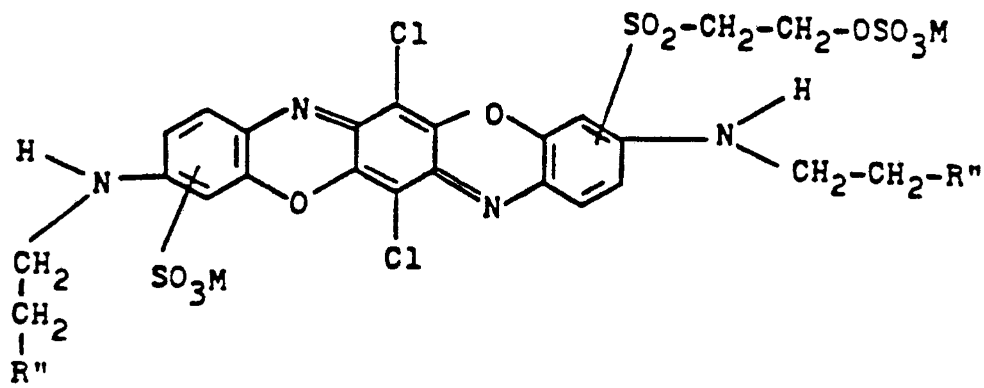

in which

M represents a hydrogen atom and, preferably, an alkali metal atom and

R'' denotes a sulfo or sulfato group.

11. A compound as claimed in one of claims 1 to 8, in which Y and Y' each represent a sulfatoethyl group.

12. A compound as claimed in claim 1 of the general formula (1c)

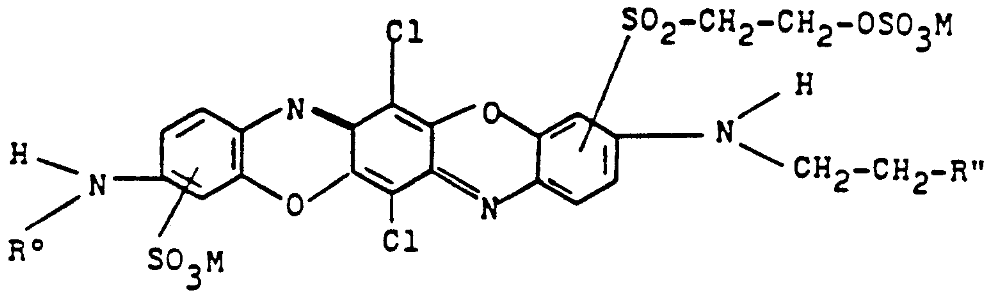

(1c)

in which
M is a hydrogen atom or an alkali metal atom,
R'' denotes a sulfo or sulfato group and
R° is a hydrogen atom, an alkyl group having 1 to 4 carbon atoms or a monosulfophenyl or monosulfobenzyl group.

13. A compound as claimed in claim 1 of the general formula (1d)

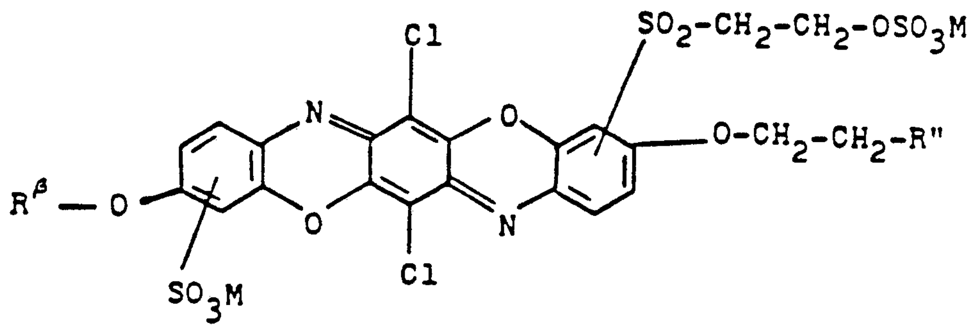

in which
M is a hydrogen atom or an alkali metal atom,
R'' denotes a sulfo or sulfato group and
$R^{\beta}$ is a hydrogen atom, an alkyl group having 1 to 4 carbon atoms, a phenyl group, a monosulfophenyl group, or a monosulfobenzyl group.

14. Preparations containing compounds of the formulae (1), (3a) and (3b)

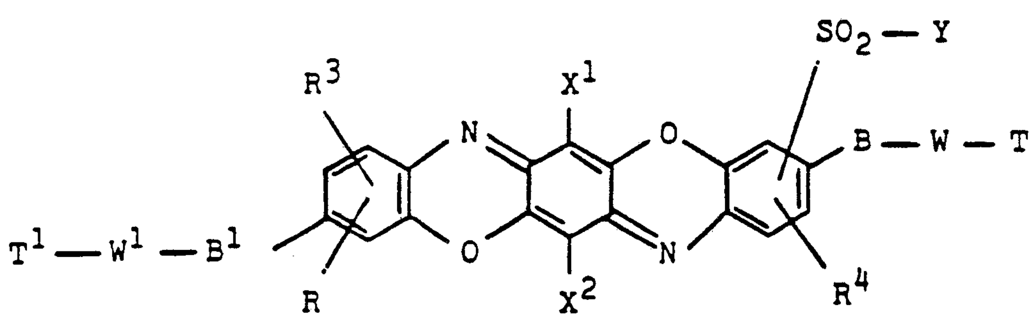

(1)

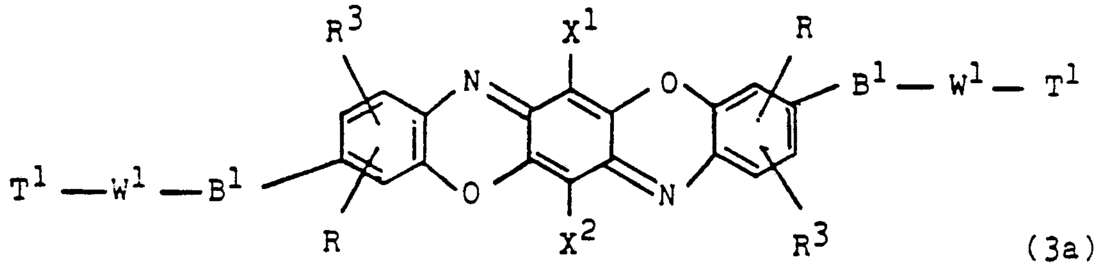

(3a)

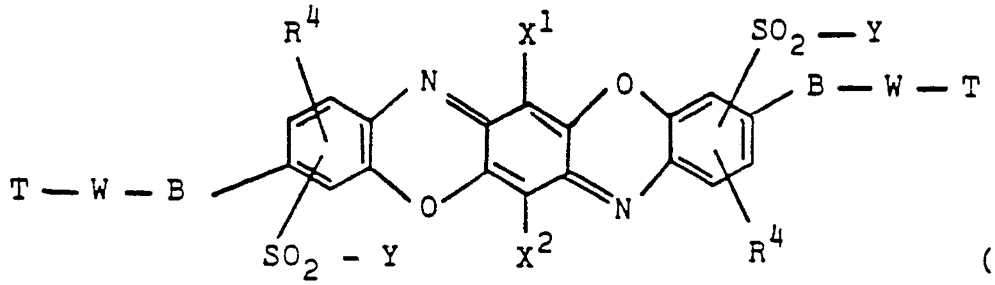

(3b)

in which the individual formula components have the meanings mentioned in claim 1 and/or the preferred meanings mentioned in at least one of the previous claims 2 to 13.

15. A process for the preparation of compounds of the general formula (1), wherein an amino compound of the general formula (4) and an amino compound of the general formula (5)

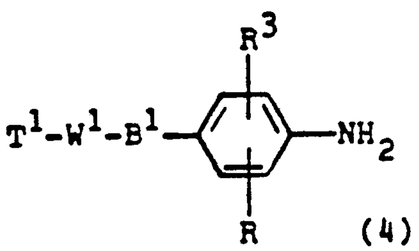

(4)

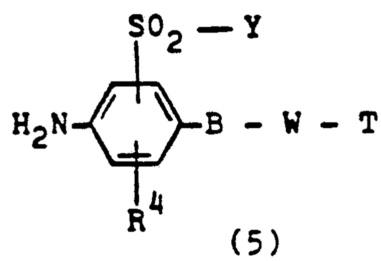

(5)

in which Y has the meaning mentioned in claim 1 or is the β-hydroxyethyl group and

R, $R^3$, $R^4$, B, $B^1$, W, $W^1$, T and $T^1$ have the meanings mentioned in claim 1,

where substituted alkyl groups in these radicals can also be hydroxyl substituted alkyl groups, and where the benzene nuclei of (4) and (5) may under no circumstances be substituted in one of the ortho positions to the specified primary amino group,

are reacted with a 1,4-benzoquinone compound of the general formula (6)

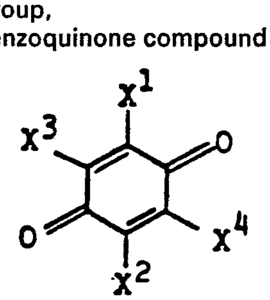

(6)

in which

$X^1$ and $X^2$ have the meanings mentioned in claim 1 and

$X^3$ and $X^4$ are identical to one another or different from one another and each is a hydrogen atom, an alkoxy group having 1 to 4 carbon atoms, a phenoxy group or a halogen atom,

where $X^3$ and $X^4$ can also have the same meaning as $X^1$ and $X^2$.

16. The process as claimed in claim 15, wherein hydroxyl groups which are in the starting compounds are simultaneously sulfated and/or aryl radicals which are in the starting compounds are simultaneously sulfonated.

17. Use of the compounds of the general formula (1) which are mentioned and defined in claim 1 or use of

the compounds of the general formula (1) prepared according to claim 15 or 16 for dyeing (including printing) of hydroxyl group-containing and/or carbonamide group-containing material, particularly fiber material.

18. Process for dyeing (including printing) of hydroxyl group containing and/or carbonamide group containing material, particularly fiber material, in which a dyestuff is applied to the material or incorporated into the material and is fixed by the action of heat and/or by the action of an acid acceptor, where in a compound of the general formula (1) mentioned and defined in claim 1 is employed as dyestuff.

**Revendications**

1. Composé triphénodioxazinique soluble dans l'eau qui répond à la formule générale 1:

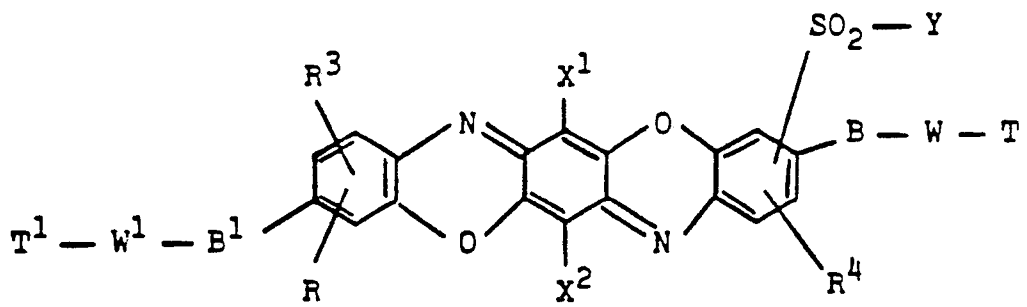

(1)

dans laquelle:

R représente un atome d'hydrogène, un radical hydrosolubilisant (par exemple un radical carboxy ou sulfo on un radical alkyle en $C_1$-$C_6$ porteur d'un radical acide), ou un radical sulfamoyle éventuellement substitué,

B représente un atome d'oxygène, un atome soufre, un radical amino -NH- ou un radical amino -N(R')- dans lequel:

R' représente un radical alkyle qui contient de 1 à 8 atomes de carbone et qui peut être substitué, ou représente un radical cycloalkyle qui contient de 5 à 8 atomes de carbone et qui porte éventuellement de 1 à 3 radicaux méthyles et/ou un radical amino, un radical alcanoylamino en $C_2$-$C_5$ ou un radical benzoylamino, ou représente un radical phényle qui peut porter un, deux ou trois substituants pris dans l'ensemble constitué par le sulfo, les halogènes, les alkyles en $C_1$-$C_4$, les alcoxy en $C_1$-$C_4$, le nitro, les radicaux $-SO_2$-Y' dans lesquels Y' a la signification indiquée ci-dessous, les alkylamino dont l'alkyle contient de 1 à 4 atomes de carbone, les dialkylamino dont chacun des alkyles contient de 1 à 4 atomes de carbone, les alcanoylamino en $C_2$-$C_5$ et le benzoylamino, ou représente un radical naphtyle qui peut porter un, deux ou trois radicaux sulfo et/ou un radical $-SO_2$-Y',

$B^1$ a l'une des significations qui ont été données pour B et peut être identique à B ou différent de B,

W représente un radical bivalent aliphatique, araliphatique ou aromatique qui peut être interrompu par un ou deux hétéro-radicaux pris dans l'ensemble constitué par -O-, -NH- et -N(R')-, où R' a la signification indiquée ci-dessus,

$W^1$ a l'une des significations qui ont été données pour W et est identique à W ou différent de W,

T représente un atome d'hydrogène ou un radical sulfo, sulfato, phosphato ou carboxy,

$T^1$ a l'une des significations indiquées pour T et peut être identique à T ou différent de T, mais représente obligatoirement un de ces radicaux hydrosolubilisants lorsque R désigne un atome d'hydrogène,

ou

les radicaux -B-W-T et $T^1$-$W^1$-$B^1$-, qui peuvent être identiques l'un à l'autre ou différents l'un de l'autre, représentent chacun un radical amino ou un radical hétérocyclique comportant de 5 à 8 maillons et contenant éventuellement un ou deux hétéroatomes supplémentaires,

$R^3$ et $R^4$ sont identiques l'un à l'autre ou différent l'un de l'autre et représentent chacun un atome d'hydrogène, un alkyle en $C_1$-$C_6$ un alcoxy en $C_1$-$C_5$, un halogène, un carboxy ou un sulfo,

$X^1$ représente un atome d'hydrogène, un atome d'halogène, un cycloalkyle, un aralkyloxy, un alcoxy en $C_1$-$C_4$, un aryloxy, un alkyle en $C_1$-$C_4$, un aryle, un aralkyle, un cyano, un carboxy, un alcoxycarbonyle en $C_2$-$C_5$, un N-alkyl-carbamoyle ou un N,N-dialkyl-carbamoyle dont les alkyles contiennent chacun de 1 à 4 atomes de carbone, un N-aryl-carbamoyle, un alcanoylamino en $C_2$-$C_5$ ou un aroylamino, les radicaux aryles présents dans ces substituants pouvant en outre porter un ou deux substituants pris dans l'ensemble constitué par les halogènes, le nitro, les alkyles en $C_1$-$C_4$, les alcoxy en $C_1$-$C_4$, le carboxy et le sulfo,

$X^2$ est identique à $X^1$ ou différent de $X^1$ et a l'une des significations qui ont été données pour $X^1$,

Y représente un radical vinyle ou un radical éthyle qui porte, en position β, un substituant éliminable par un composé alcalin,

Y' représente un radical vinyle ou un radical éthyle qui porte, en position β, un substituant éliminable par un composé alcalin,

et, parmi les radicaux sulfo et sulfato qui peuvent être contenus dans la molécule (1), il y en a obligatoirement au moins un, de préférence au moins deux, dans la molécule (1).

2. Composé selon la revendication 1 dans lequel $X^1$ et $X^2$ représentent l'un et l'autre un atome d'hydrogène, un radical alcanoylamino en $C_2$-$C_5$, un radical phénoxy éventuellement porteur d'un atome de chlore, un radical alcoxy en $C_1$-$C_4$, un radical alkyle en $C_1$-$C_4$, un atome de chlore ou un atome de brome.

3. Composé selon la revendication 1 dans lequel $X^1$ et $X^2$ représentent l'un et l'autre un atome de chlore ou de brome.

4. Composé selon l'une quelconques des revendications 1, 2 et 3, dans lequel le radical -B-W-T ou le radical $T^1$-$W^1$-$B^1$- ou ces deux radicaux, qui peuvent être identiques l'un à l'autre ou différents l'un de l'autre, représentent chacun un radical amino répondant à la formule 2:

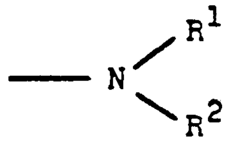
(2)

dans laquelle:

$R^1$ représente un atome d'hydrogène ou a l'une des significations de R',

$R^2$ représente un atome d'hydrogène, ou représente un radical alkyle qui contient de 1 à 8 atomes de carbone et qui peut être substitué, ou représente un radical cycloalkyle qui contient de 5 à 8 atomes de carbone et qui porte éventuellement de 1 à 3 radicaux méthyles et/ou un radical amino, un radical alcanoylamino en $C_2$-$C_5$ ou un radical benzoylamino, ou représente un radical phényle qui peut porter un, deux ou trois substituants pris dans l'ensemble constitué par le sulfo, le carboxy, les halogènes, les alkyles en $C_1$-$C_4$, les alcoxy en $C_1$-$C_4$, le nitro, les radicaux $-SO_2$-Y' dans lesquels Y' a la signification donnée à la revendication 1, les alkylamino dont l'alkyle contient de 1 à 4 atomes de carbone, les dialkylamino dont chacun des alkyles contient de 1 à 4 atomes de carbone, les alcanoylamino en $C_2$-$C_5$ et le benzoylamino, ou représente un radical naphtyle qui peut porter un, deux ou trois radicaux sulfo et/ou un radical $-SO_2$-Y', $R^2$ pouvant être identique à $R^1$ ou différent de $R^1$, ou

$R^1$ et $R^2$ forment ensemble, et avec l'atome d'azote, un radical pipéridino, pipérazino ou morpholino.

5. Composé selon l'une quelconques des revendications 1 à 4, dans lequel W et $W^1$, qui peuvent être identiques l'un à l'autre ou différents l'un de l'autre, représente chacun:

- un radical alkylène en $C_1$-$C_8$ dont la chaîne alkylène peut être interrompue par un ou deux atomes d'oxygène ou radicaux amino -NH- ou -N(R')-, où R' a la signification qui lui a été donnée à la revendication 1,
- un radical alkylène-phénylène, phénylène-alkylène, phénylène-alkylène-phénylène ou alkylène-phénylène-alkylène, les radicaux alkylènes de ces radicaux araliphatiques contenant de 1 à 4 atomes de carbone et les noyaux benzéniques pouvant en outre porter un ou deux substituants pris dans l'ensemble constitué par le sulfo, le carboxy, le sulfamoyle, le carbamoyle, le méthyle, l'éthyle, le méthoxy, l'éthoxy, le nitro et le chlore,
- un radical phénylène qui peut en outre porter un ou deux substituants pris dans l'ensemble constitué par le sulfo, le carboxy, le sulfamoyle, le carbamoyle, le méthyle, l'éthyle, le méthoxy, l'éthoxy et le chlore, ou
- un radical cycloalkylène.

6. Composé selon l'une quelconque des revendications 1 à 4, dans lequel W ou $W^1$ représente un radical alkylène en $C_2$-$C_4$ ou un radical phénylène qui peut porter un ou de deux substituants pris dans l'ensemble constitué par le sulfo, le carboxy, le méthyle, le méthoxy, l'éthoxy et le chlore, ou représente un radical alkylène-phénylène dont le noyau benzénique est lié à T ou à $T^1$ et peut en outre porter un radical sulfo.

7. Composé selon l'une quelconque des revendications 1, 2, 5 et 6, dans lequel B et/ou $B^1$ représente un radical -NH- ou un radical -N(R')- dans lequel R' représente un radical alkyle en $C_1$-$C_4$ qui peut porter un ou deux substituants choisis dans l'ensemble constitué par l'hydroxy, les halogènes, le sulfato, le phosphato, le sulfo, le carboxy, les alcoxycarbonyles en $C_2$-$C_5$, les alcanoylamino en $C_2$-$C_5$, les alkylamino dont l'alkyle contient de 1 à 4 atomes de carbone, les dialkylamino dont chacun des alkyles contient de 1 à 4 atomes de carbone, les radicaux alkylamino ou dialkylamino dont des alkyles de la monoalkylamine ou de la dialkylamine contiennent chacun de 1 à 4 atomes de carbone et portent un radical hydroxy, sulfo, carboxy, sulfato ou phosphato ou un radical alcoxy en $C_1$-$C_4$ ou un radical sulfato-2 éthoxy ou β-sulfato-bis-, -tris- ou -tétrakis-(oxy-éthylène), les radicaux $-SO_2$-Y' dans lesquels Y' a la signification qui lui a été donnée à la revendication 1, le phényle et les phényles éventuellement porteurs de substituants pris dans l'ensemble constitué par les alkyles en $C_1$-$C_4$, les alcoxy en $C_1$-$C_4$, les halogènes, le nitro, le sulfo, le carboxy, les radicaux $-SO_2$-Y' dans lesquels Y' a la signification indiquée ci-dessus, l'amino, les alkylamino dont l'alkyle contient de 1 à 4 atomes de carbone, les alcanoylamino en $C_2$-$C_5$, le benzoylamino, les sulfobenzoylamino et les alcoxycarbonyles en $C_2$-$C_5$.

8. Composé selon la revendication 4 dans lequel $R^1$ et $R^2$, qui peuvent être identiques l'un à l'autre ou différents l'un de l'autre, réprésentent chacun ou atome d'hydrogène ou un radical alkyle en $C_1$-$C_4$ qui peut porter un ou deux substituants choisis dans l'ensemble constitué par l'hydroxy, les halogènes, le sulfato, le phosphato, le sulfo, le carboxy, les alcoxycarbonyles en $C_2$-$C_5$, les alcanoylamino en $C_2$-$C_5$, les alkylamino dont l'alkyle contient de 1 à 4 atomes de carbone, les dialkylamino dont les alkyles contiennent chacun de 1 à 4 atomes de carbone, les radicaux alkylamino et dialkylamino dont l'alkyle ou les alkyles de la monoalkylamine

ou de la dialkylamine contiennent chacun de 1 à 4 atomes de carbone et portent un radical hydroxy, sulfo, carboxy, sulfato ou phosphato ou un radical alcoxy en $C_1$-$C_4$ ou un radical sulfato-2 éthoxy ou β-sulfato-bis-, -tris- ou -tétrakis-(oxy-éthylène), les radicaux $-SO_2$-Y' dans lesquels Y' a la signification qui lui a été donnée à la revendication 1, le phényle et les phényles éventuellement porteurs de substituants pris dans l'ensemble constitué par les alkyles en $C_1$-$C_4$, les alcoxy en $C_1$-$C_4$, les halogènes, le nitro, le sulfo, le carboxy, les radicaux $-SO_2$-Y' dans lesquels Y' a la signification indiquée ci-dessus, l'amino, les alkylamino dont l'alkyle contient de 1 à 4 atomes de carbone, les alcanoylamino en $C_2$-$C_5$, le benzoylamino, les sulfobenzoylamino et les alcoxycarbonyles en $C_2$-$C_5$.

9. Composé selon la revendication 1 qui répond à la formule générale 1a

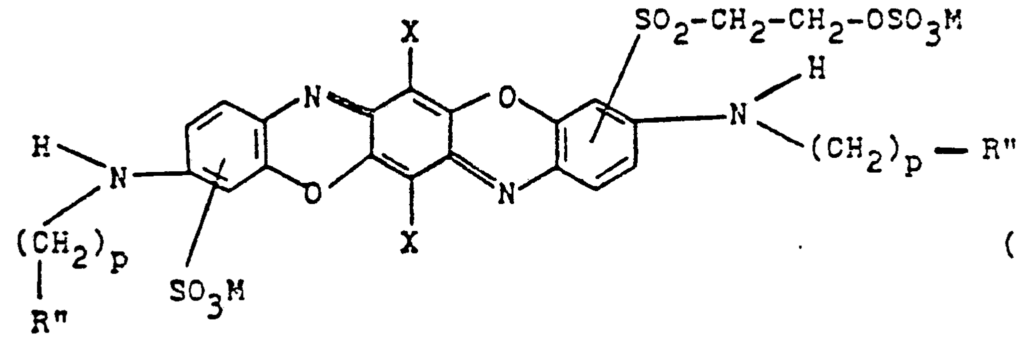

(1a)

dans laquelle

X représente un atome de brome ou, mieux, de chlore,

M représente un atome d'hydrogène ou, mieux, un atome de métal alcalin,

p désigne un nombre égal à 1, à 2, à 3 ou à 4, et

R'' représente un radical sulfo, sulfato ou (sulfato-2 éthoxy)-2 éthyle, ou encore un radical monosulfophényle ou disulfophényle,

les deux symboles p, de même que les deux symboles R'', pouvant avoir la même significaion ou des significations différentes.

10. Composé selon la revendication 1 qui répond à la formule générale 1b:

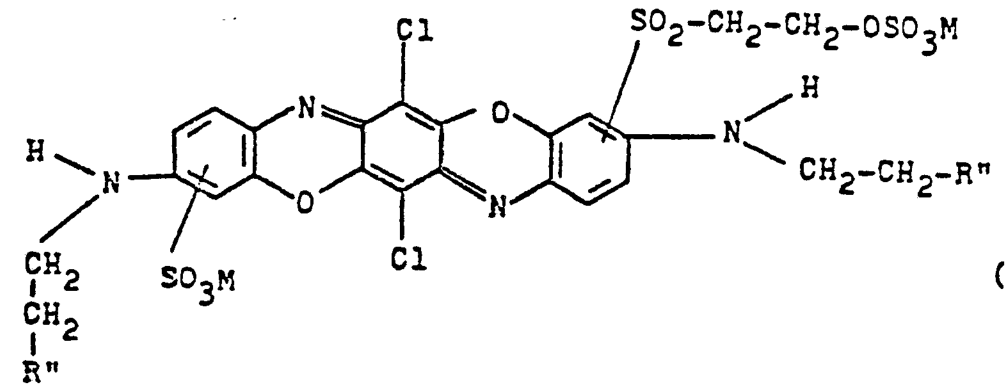

(1b)

dans laquelle

M représente un atome d'hydrogène ou, mieux, un atome de métal alcalin et

R'' représente un radical sulfo ou sulfato.

11. Composé selon l'une quelconque des revendications 1 à 8, dans lequel Y et Y' représentent chacun un radical sulfato-éthyle.

12. Composé selon la revendication 1 qui répond à la formule générale 1c:

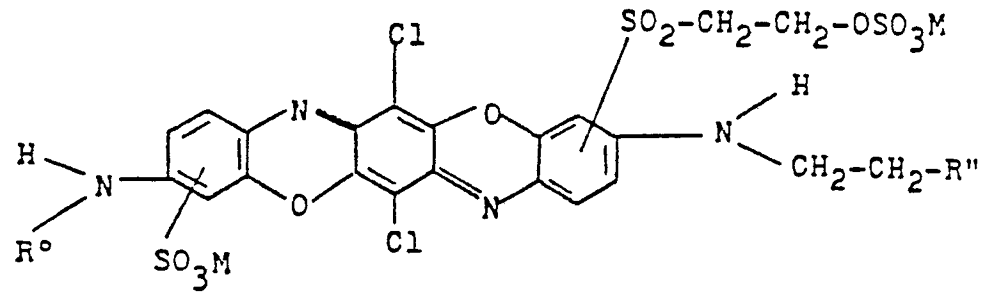

(1c)

dans laquelle

M représente un atome d'hydrogène ou un atome de métal alcalin,

R'' représente un radical sulfo ou sulfato, et

R° représente un atome d'hydrogène, un radical alkyle contenant de 1 à 4 atomes de carbone ou un radical monosulfophényle ou monosulfobenzyle.

13. Composé selon la revendication 1 qui répond à la formule générale 1d:

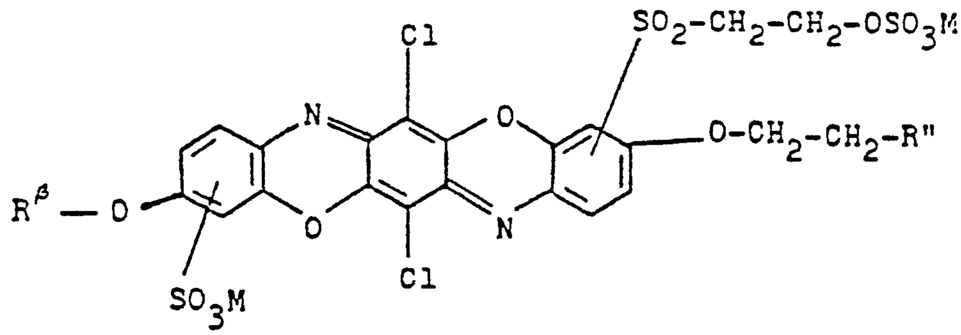

(1d)

dans laquelle

M représente un atome d'hydrogène ou un atome de métal alcalin,

R'' représente un radical sulfo ou sulfato, et

$R^\beta$ représente un atome d'hydrogène, un radical alkyle contenant de 1 à 4 atomes de carbone ou un radical phényle, monosulfophényle ou monosulfobenzyle.

14. Compositions qui contiennent des composés répondant aux formules 1, 3a et 3b

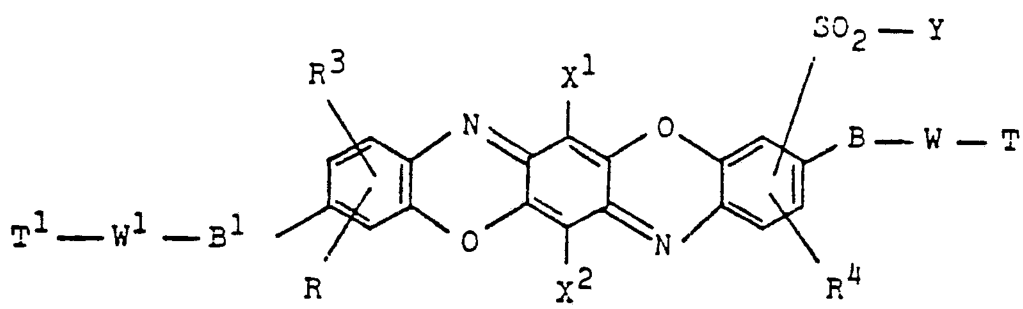

(1)

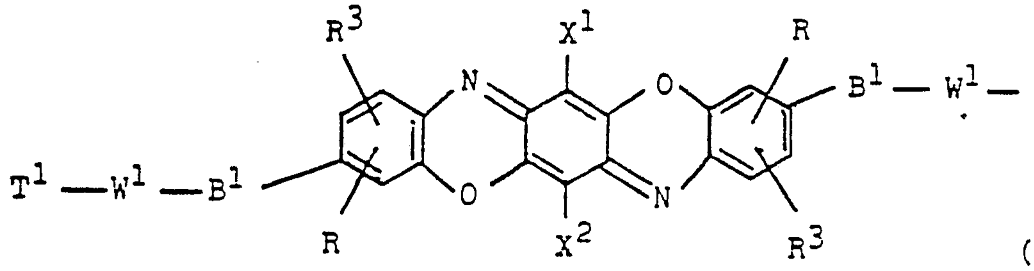

(3a)

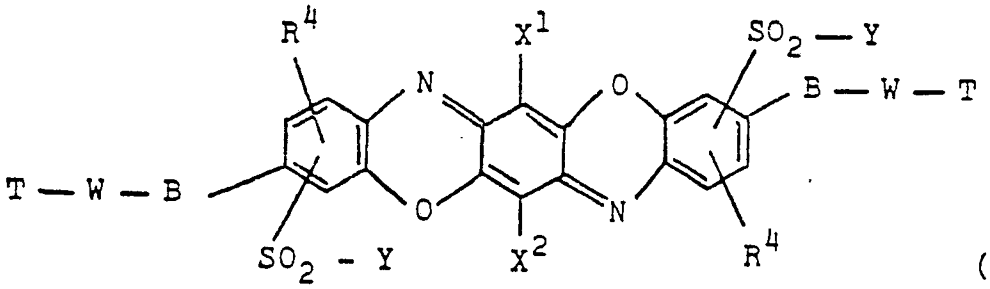

(3b)

dans lesquelles les divers symboles ont les significations qui leur ont été données à la revendication 1 et/ou les significations préférées qui leur ont été données dans au moins une des revendications 2 à 13 précédentes.

15. Procédé de préparation des composés de formule générale 1, procédé caractérisé en ce qu'on fait réagir un composé aminé de formule générale 4 et un composé aminé de formule générale 5:

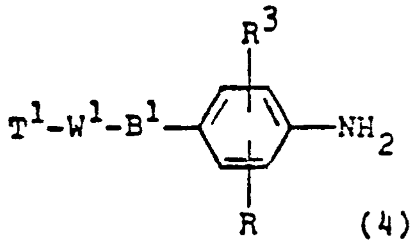

(4)

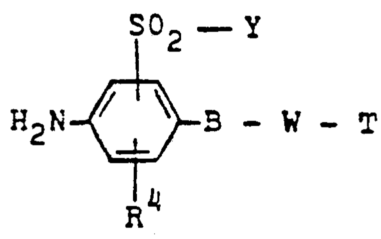

(5)

formules dans lesquelles

Y a la signification donnée à la revendication 1 ou représente un radical hydroxy-2 éthyle, et

R, $R^3$, $R^4$, B, $B^1$, W, $W^1$, T et $T^1$ ont les significations données à la revendication 1,

les radicaux alkyles substitués présents dans ces radicaux pouvant également être des alkyles porteurs d'un hydroxy, et les noyaux benzéniques de (4) et (5) étant obligatoirement dépourvus de substituant en une des positions ortho par rapport au radical amino primaire représenté,

avec une benzoquinone-1,4 répondant à la formule générale 6:

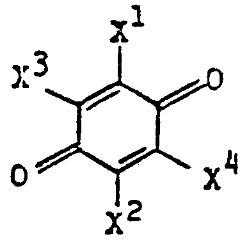

(6)

dans laquelle

$X^1$ et $X^2$ ont les significations données à la revendication 1, et

$X^3$ et $X^4$ sont identiques l'un à l'autre ou différents l'un de l'autre et représentent chacun un atome d'hydrogène, un radical alcoxy contenant de 1 à 4 atomes de carbone, un radical phénoxy ou un atome d'halogène,

$X^3$ et $X^4$ pouvant également avoir la même signification que $X^1$ et $X^2$.

16. Procédé selon la revendication 1, caractérisé en ce que des radicaux hydroxy qui se trouvent dans les corps de départ sont en même temps sulfatés et/ou des radicaux aryles qui se trouvent dans les corps de départ sont en même temps sulfonés.

17. Application des composés répondant à la formule générale 1 qui a été représentée et définie à la

revendication 1, ou des composés de formule générale 1 qui ont été préparés selon l'une des revendications 15 et 16 à la teinture (y compris à l'impression) de matières contenant des radicaux hydroxy et/ou des radicaux carbamoyles, plus particulièrement de matières fibreuses de ce genre.

18. Procédé pour teindre (y compris pour imprimer) des matières contenant des radicaux hydroxy et/ou des radicaux carbamoyles, plus particulièrement des matières fibreuses de ce genre, dans lequel on applique un colorant sur la matière, ou on l'introduit dans la matière, et on le fixe par la chaleur et/ou au moyen d'un accepteur d'acides, procédé caractérisé en ce qu'on utilise comme colorant un composé répondant à la formule générale 1 qui a été représentée et définie à la revendication 1.